# EUROPÄISCHE PATENTSCHRIFT

(11) **EP 2 091 693 B1**
(45) Veröffentlichungstag und Bekanntmachung des Hinweises auf die Patenterteilung: **30.12.2009**
(21) Anmeldenummer: 07816249.2
(22) Anmeldetag: 13.11.2007
(51) Int. Cl.: B25B 15/00, F16B 23/00

(54) **SCHLITZSCHRAUBE**
SLOTTED SCREW
VIS À FENTE

(30) Priorität: 15.11.2006 CH 18322006; 06.07.2007 CH 10932007
(43) Veröffentlichungstag der Anmeldung: 26.08.2009
(73) Patentinhaber: Zed Design Communication Technologies, 1814 La Tour-de-Peilz (CH)
(72) Erfinder: ZOLLER, Hanspeter, 1814 La Tour-de-Peilz (CH)
(74) Vertreter: Rüfenacht, Philipp Michael
(86) Internationale Anmeldenummer: PCT/CH2007/000566
(87) Internationale Veröffentlichungsnummer: WO 2008/058414

(56) Entgegenhaltungen:
- US-A- 2 015 878
- US-A- 3 411 396
- US-A- 4 670 927
- US-B1- 6 886 431
- US-S1- D 438 774

## Beschreibung

### Technisches Gebiet

Die Erfindung betrifft Diametralschlitz-Schrauben sowie 3R-Schlitzschrauben (dreizählige Radialschlitzschrauben) und deren Schraubendreherspitzen- / Bits.

### Stand der Technik

Seit der Einführung der Schraubenherstellung von Kreuzschlitzschrauben des Typs H (Phillips) und Z (Pozidriv), sowie der teilweise angewandten Sondertypen von Kreuzschlitzschrauben mit zusätzlich erweitertem Diametralschlitz, sind die ursprünglichen Standard-Schlitzschrauben auf Grund Ihrer Nachteile einer gesicherten Zentrierung für hauptsächlich mechanische Schraubvorgänge unterbewertet worden.

Diese Folgerung ist durchaus verständlich, da bei den heutigen Schraubvorgängen der grösste Teil dieser Kreuzschlitz-Anwendungen aus Gründen einer gesicherten Zentrierung zur Übertragung der gängigen Drehmomente den Arbeitsvorgang vereinfachen.

Als Alternativen wurden ebenfalls die so genannten "Plus-Minus-Kreuzschlitzschrauben" gemäss DIN 7962 mit einem vollen Diametralschlitz nach DIN 84 hergestellt und dies insbesondere zur Erhöhung der Drehmomentübertragung bei Schraubenverbindungen für Höchstanwendungen. Der Zentriervorgang von Kreuzschlitzschrauben bei vollautomatischen Schraubvorgängen bietet nützliche Eigenschaften und vereinfacht deren Anwendung. Aus diesen und anderen Gründen werden die so genannten Kreuzschlitzschrauben mehr angewandt.

Die US 3,411,396 beschreibt eine Schraube mit sechs, diametral angeordneten Schlitzen, wobei der Boden der Schlitze nach aussen hin unter einem Winkel von 5°-15° nach unten geneigt ist. Zudem ist der Boden der Schlitze auch radial zu einer Seite hin geneigt. Dadurch bietet die eine Seitenwand der Schlitze eine grössere Wirkungsfläche als die andere Seitenfläche. Die Seitenwände der Schlitze können sowohl vertikal als auch leicht geneigt sein.

Die US D 438,774 S zeigt einen Biteinsatz eines Schraubendrehers für Diametralschlitzschrauben. Dabei ist eine halbrunde erhöhte Zentrierfläche in der Spitze vorhanden, und die Schlitzauflageflächen sind horizontal ausgebildet. Zudem sind die Seitenwände vertikal oder nahezu vertikal.

Bei einer grundlegenden und genauen Untersuchung der Eigenschaften von Kreuzschlitzschrauben ist es jedoch wichtig, auch deren Nachteile erkennen zu können, unter anderem:
- Die gängigen Kreuzschlitzschrauben sind leicht zentrierbar, aber dies nur unter der Anwendung einer Zentrierdruckkraft, welche die Auswurfkräfte (Comeout) überwindet und dies durch einen so genannten notwendigen Anpressdruck, welcher bei erhöhten Drehmomenten ebenfalls proportional verstärkt werden muss.
- Somit besteht bei starken Drehmomentanwendungen und einem nicht genügenden Anpressdruck die Gefahr, dass die Schraubendreher- / Bitspitze aus dem Kreuzschlitz herausgeworfen wird.
- Dieser Nachteil ist insbesondere bei Kreuzschlitzschrauben des Typs H (Phillips) vorhanden, bei denen alle Wände und Rippen des Kreuzschlitzes in der Tiefe schräg geneigt sind und somit auf Grund dieser Geometrie die Komponente der Auswurfkraft erzeugen.
- Bei den neueren Kreuzschlitzschrauben des Typs Z (Pozidriv) sind die 4 Anzugswände senkrecht und nur die Spitze geneigt: somit ist die so genannte Auswurfkraft (Comeout) auf ein Minimum reduziert.
- Auf Grund der Ansichtsgeometrie (Oberfläche der Kreuzschlitze), ist deren Dimension gegenüber dem Durchmesser der betreffenden Schrauben reduziert, wobei bei der Anwendung von Kreuzschlitzgeometrien die Druckkräfte angewandter Drehmomente sich grösser als bei Diagonalschlitzschrauben erweisen und diese Kräfte können nur durch die Vertiefung der Schlitzflächen verteilt werden.
- Die Folge ist, dass bei Kreuzschlitzschrauben von tieferem Härtegrad oder bei der Überlastung des Drehmomentes bei Standard-Kreuzschlitzschrauben die Schlitzgeometrie zerstört wird, und dies beim Einschraubvorgang sowie bei deren Herauslösung.
- Bei manueller Schraubung von Kreuzschlitzschrauben oder mit einem entsprechenden mechanischen Schraubgerät (Schraub-Bohrmaschine) ist ein jeweiliger Anpressdruck notwendig, welcher je nach Drehmomentanspruch sowie der dafür notwendigen Operationslage des Anwenders seine auszuführende Arbeit zum Teil schwer belasten kann.

Es ist somit Aufgabe der vorliegenden Erfindung, eine Diametralschlitzschraube und eine Schraubendreherspitze/-bit zu schaffen, die vorgenannte Nachteile der Kreuzschlitzschrauben vermeiden. Die Aufgabe ist mit den Merkmalen des Anspruchs 1 gelöst.

### Darstellung der Erfindung

Die Erfindung eignet sich für sämtliche erneuerbaren Diametralschlitzschrauben nach DIN- und ISO-Normen sowie für Sonderausführungen nach nicht metrischen Gewinden und für Schraubendreher, die zur Anwendung mit einem Handgriff versehen sind sowie für die entsprechenden Bit-Einsätze für elektrisch oder pneumatisch angetriebene Schraubapparate. Diese Erfindung ermöglicht den Ausbau der bestehenden Standards von Diametralschlitzschrauben mit horizontaler Schlitzgrundebene mit einer zusätzlichen Zentriervorrichtung, und als weitere Möglichkeit, die nachträgliche Vergrösserung der Kraftübertragungsflächen mit nach aussen geneigten Schlitzgrundebenen.

Hiermit sind somit 2 voll zusammenhängende Versionen dargestellt:
- Ausführung "A", Diametralschlitzschraube mit zusätzlicher Zentriervorrichtung und maximale Vergrösserung der Kraftübertragungsflächen mit nach aussen geneigten Schlitzgrundebenen;
- Ausführung "B", Diametralschlitzschraube mit zusätzlicher Zentriervorrichtung und normale Vergrösserung der Kraftübertragungsflächen mit horizontalen Schlitzgrundebenen.

Auf Grund der Geometrie der Diametralschlitzschrauben beruht das Prinzip dieser Erfindung auf einer Vergrösserung der Drehmomentübertragungskräfte sowie auf einer gesicherten Zentrierung der Schraubendreher- / Bitspitzen, einer Eigenschaft welche bei den gängigen und zurzeit vorhandenen Diametralschlitzschrauben nicht vorhanden ist.

Somit sind folgende Prinzipien angewandt, welche eine maximale Kraftübertragung der Drehmomente und Sicherung der Zentrierung dieser Erfindung vorsehen, insbesondere:
- Das Vorhandensein von reinen vertikalen bzw. parallelen Kontaktflächen zur Drehmomentübertragung im Durchmesser des entsprechenden Diametralschlitzes erzeugen keine Auswurfkräfte (Comeout) mehr: damit ist die volle Komponente der Drehmomente ab deren Zentrum der Drehachse übertragbar.
- Die notwendige Kraft zur Zentrierung der Schraubendreher- / Bitspitze in den entsprechend angepassten Drehkraftübertragungsflächen ist minimal und nicht proportional sowie nicht abhängig von der Drehmomentübertragung: anders als bei den Kreuzschlitzschrauben, ist dieser geringe Anpressdruck einzig zur Sicherung der zentralen Lage der Schraubendreher- / Bitspitze in der entsprechenden Zentrierform des Diagonalschlitzes notwendig.
- Die Zentrierung der Schraubendreher- / Bitspitzen wird mit oder ohne die halbkugelförmige Zentrierfläche (15) auf dem Schraubenkopf vereinfacht, wobei der halbrunde Zentrierteil der Schraubendreher- / Bitspitzen vor dem Einsteigen in den Diametralschlitz auf dem Gesamtdrehwinkel von 180° und durch den leichten Anpressdruck vorgesichert ist.
- Durch die Einheit der vertikalen bzw. parallelen halbrunden Zentrierfläche mit der Fläche der ebenfalls vertikalen bzw. parallelen Schlitzwände ergibt sich eine gesamte Vergrösserung der Drehmomentübertragungsflächen von über 150% gegenüber den zur Zeit vorhandenen 100% der üblichen Diametralschlitzschrauben. Somit ist bei der Anwendung von starken Drehmomenten deren Kraftverteilung auf eine einzige und nicht durch komplementäre Druckelemente aufgelöste Druckfläche von grossem Vorteil.
- Die Erhöhung der Kraftverteilflächen an den äusseren Enden des Diagonalschlitzes tragen zu dieser verbesserten Drehmomentverteilung bei. Dies gilt insbesondere für die Ausführung des Typs A.
- Das Prinzip der angewandten Geometrie der halbrunden Zentrierfläche in der Mitte des Diagonalschlitzes ermöglicht, dank seiner Proportion, ebenfalls dessen Anwendung in konischen Diametralschlitz-Senkschrauben, deren Konusflächen einen Aussenwinkel von 45° aufweisen: diese Schraubenform, im vertikalen Gesamtschnitt betrachtet, ist die grundlegende Darstellung für die Begrenzung von Zentrierschlitzausführungen im besagten Schraubenkopf. Bei diesen Senkschrauben wird die Schraubendreher- / bzw. Bitspitze entsprechend angepasst.
- Somit wurde die vorliegende Erfindung durch diese Betrachtung und Annahme auf die gesamte Anwendung der Schlitzschraubentypen definiert, wobei die Schraubenkopfformen keinen Einfluss auf die Gestaltung der halbrunden Zentrierfläche und der Diagonalschlitzendflächen erweisen, welche hiermit in allen Typen ohne manuelle und mechanische Behinderungen angewendet werden können.
- Durch diese Darstellung der Ausführung A für Diametralschlitzschrauben ist deren Anpassung durch einen einfachen technischen Aufwand erreichbar, denn die halbrunden Zentrierflächen und die schrägen Diametralschlitzendflächen können bei der Herstellung dieser Schrauben mittels spanloser Warmverformung eingetragen werden.
- Auf Grund des besagten Konzeptes können diese neuen Diametralschlitzschrauben ebenfalls mit den zur Zeit gängigen Schraubendreher- / Bits als Einführungslösung verwendet werden, jedoch ohne Zentrierfunktion und ohne Erhöhung der möglichen Drehmomente.

### Vorteile der betreffenden Diametralschlitz-Schraubentypen A und B

- Diese neuen Schlitzschraubentypen und deren Ausführungsvarianten sowie die entsprechend erstellten Schraubendreher- / Bitspitzen können gegenüber dem analogen heutigen Schlitzschraubenstandard einen Drehmomentzuwachs von über 50% erfüllen.
- Durch die halbkugelförmige Zentrierfläche (15) auf dem Schraubenkopf sowie die halbrunde Zentrierfläche in der Schraube und die geneigten Aussenflächen des Diametralschlitzes sowie der entsprechenden Spitzen der Schraubdreher- / Bitspitzen ist die Zentrierung vor dem Schraubvorgang und dank dem geringen Anpressdruck gesichert.
- Entgegen der Auswurfkräfte bei Kreuzschlitzschrauben sind bei dieser Erfindung die so genannten Comeout-Kräfte nicht mehr vorhanden und die bestehenden Kontaktflächen, insbesondere an den beiden Enden des Drehschlitzes, erlauben eine optimale Verteilung der Drehmomente.
- Entgegen der Auswurfkräfte bei Kreuzschlitzschrauben ist der Zentrier-Anpressdruck bei dieser Erfindung minimal und nicht abhängig sowie nicht proportional mit wachsenden Drehmomenten.
- Die Erfindung ist anwendbar für die Erneuerung aller analog vorhandenen Diametralschlitzschrauben, inklusive deren konischen Senkkopfvarianten sowie der Erzeugnisse nach DIN, ISO-Normen und analogen Normen, nebst vorgesehenen Sonderausführungen nach nicht metrischen Gewinden sowie für medizinische Anwendungen.
- Die Erfindung ist somit anwendbar für alle Diametralschlitzschrauben mit Linsenkopf, Halbrundkopf, Senkkopf, Zylinderkopf, mit Aussenvierkant- und Aussensechskantkopf sowie für Schraubentypen in der Anwendung als Holzschrauben, Spanplattenschrauben, Schnellbauschrauben, Bohrschrauben mit Flügeln, Blechschrauben, Bohrschrauben, Gewindeschneiderschrauben, Maschinenschrauben, Kunststoffschrauben und entsprechende Sonderausführungen.
- Dank dieser Erfindung von Diametralschlitzschrauben ist die umfangreiche Anwendung von genormten Zentrierhülsen nicht mehr notwendig: dadurch entstehen für diese Schraubentypen Kosten-, Zeit- und Montagevorteile.
- Auf Grund der vorhandenen halbkugelförmigen Zentrierfläche (15) auf den Schraubenköpfen dieser Diametralschlitzschrauben ist die Werkzeugpositionierung mit manuellen Schraubdrehern und Industrierobotern beim Einschrauben wie bei Demontageprozessen mit geringem Realisierungsaufwand erreicht.
- Zwecks Erhöhung der Sicherung des Zentrierungsvorganges werden die jeweiligen Hälften der Schlitzwändeflächen (9) in parallelem Bezug zur Längsachse des Diametralschlitzes in einen Winkel von 0° bis 20°, bevorzugt 3°, erstellt und dies zur Erleichterung der Einfügung der Zentrierflächen (5) und der vertikalen Schraubdruckflächen (1) der aufzunehmenden Schraubendreher- / Bitspitze in den Diametralschlitz. Diese Anpassung garantiert somit den vollen parallelen Kontakt der Schraubdruckflächen (1) der Bits mit den Schlitzflächen (9) der Diametralschlitzschraube, was zu einer maximalen Übertragung der Drehkräfte auf die gesamten vorhandenen Kontaktflächen ermöglicht.
- Der technische Aufwand zur Herstellung dieser Diametralschlitzschrauben-Erfindung ist ausgeglichen gegenüber der durch diese einfache Lösung erzielten Anwendungen und Vorteilen, insbesondere der grösseren Drehkraftübertragung.
- Ziel der Erfindung ist die Neubewertung und Neuverwendung der Diametralschlitz-schraubentypen und deren Schraubendreher- / Bitspitzen dank der gesicherten Zentrierung und Erhöhung der Drehmomente.

Durch die Herstellung dieser Schraubenerfindung sowie der dazu vorgesehenen Schraubendreher- und Bitspitzen ist annehmbar, dass die erneuerten Schlitzschraubentypen gegenüber den Kreuzschlitzschrauben wieder mehr an Bedeutung und an Anwendung gewinnen können: dies ist die Wunschfolgerung für diese Erfindungserzeugnisse, wobei die Studien und Kontakte für eine eventuelle Annahme dieser Erfindung als neue Norm für Diametralschlitzschrauben aufgenommen werden.

Diese Erfindung lässt sich neben den erwähnten Diametralschlitzschrauben auch auf neuartige dreizählige Radialschlitzschrauben (3R-Radialschlitzschrauben) anwenden. Bei diesen sind anstatt eines einzigen zentrierbaren Diametralschlitzes auf dem Schraubenkopf 3 vertikal zentrierte Radialschlitze angeordnet, wobei jeder einzelne Radialschlitz die genaue Hälfte des Diametralschlitzes darstellt und die 3 Radialschlitze ab ihrem tiefsten Punkt und längst der vertikalen Mitte der halbrunden Zentrierflächen miteinander verbunden werden.

Somit sind die genannten 3 einzelnen Radialschlitze auf dem Schraubenkopf aus dem Zentrum der Schraubenachse in einem Winkel von jeweils 120° positioniert und stellen somit die Einheit des dreifachen Radialschlitzes dar.

Auf Grund der Geometrie der 3R-Radialschlitzschrauben beruht das Prinzip dieser Erfindung auf einer Vergrösserung der Drehmomentübertragungskräfte sowie auf einer gesicherten Zentrierung der Schraubendreher- / Bitspitzen, einer Eigenschaft welche bei den gängigen und zurzeit (noch) vorhandenen Schlitzschrauben nicht vorhanden ist.

Durch die Auflage des 3R-Bits auf den entsprechenden Grundebenen der Radialschlitze sind die Zentrierung sowie die Stabilität der Kraftübertragung gesichert, wobei wie bei den Diametralschlitzschrauben die vorhandene halbkugelförmige Zentrierfläche ebenfalls vorhanden ist, was eine manuelle wie auch mechanische Zentrierung des Bits in den besagten Radialschlitzen vereinfacht.

### Vorteile der betreffenden 3R-Radialschlitzschrauben der vorgesehenen A Typen

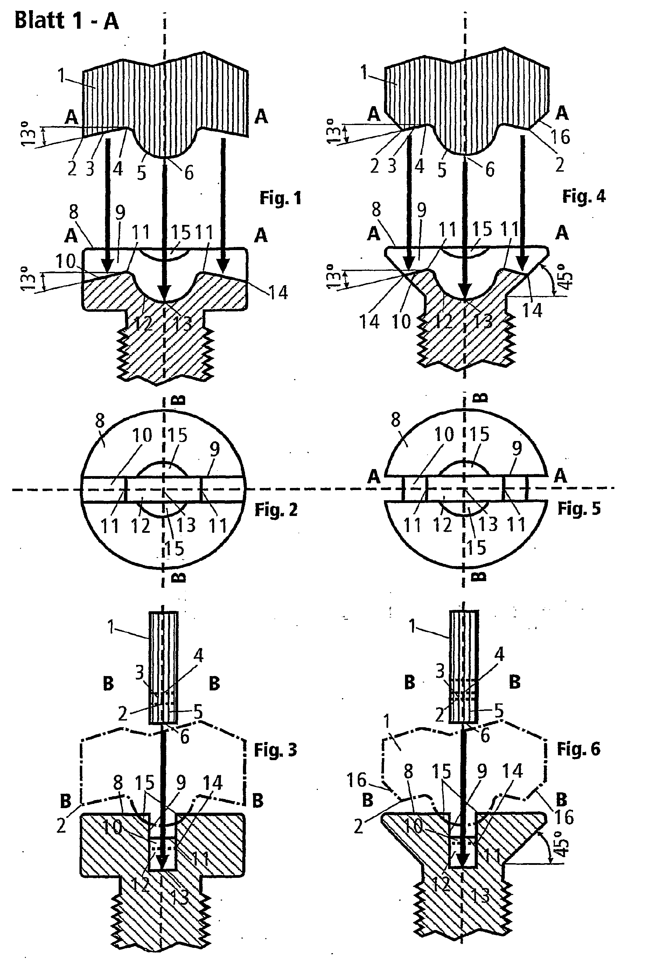

- Die Grundlage dieses 3R-Radialschlitzschraubentyps beruht auf die Anpassung des Schraubenkopfs an den 3R-Bit, welcher aus 3 halbe und zusammengefügte Diametralschlitzbits des Typs A besteht (siehe Blatt 1 - A, Fig. 4), die mit den nach aussen geneigten Grundflächen (3) sowie mit den abschliessenden Eckflächen (16) die Druck- und Zentrierstabilität im Schraubenkopf sichern.
- Diese neuen 3R-Radialschlitzschraubentypen und deren Ausführungsvarianten sowie die entsprechend erstellten Schraubendreher- / Bitspitzen können gegenüber den vorhandenen Kreuzschlitzschrauben einen Drehmomentzuwachs von ca. + 75% erfüllen und dies in Bezug auf die Kraftanwendungen, welche bei den äussersten Kraftübertragungszonen in den Schraubenköpfen angewendet werden müssen.
- Durch die halbkugelförmige Zentrierfläche (15) auf dem Schraubenkopf sowie die halbrunden und zur Hälfte geteilten Zentrierflächen (12) in der Schraube, die geneigten Grundflächen (10, 17) der Radialschlitze sowie der entsprechenden Spitzen der Schraubendreher- / Bitspitzen (5,6,1) ist die Zentrierung zum Beginn, vor dem Schraubvorgang und der vollen Kraftübertragung mit geringen Anpressdruck gesichert.
- Entgegen der Auswurfkräfte bei Kreuzschlitzschrauben sind bei dieser Erfindung die so genannten Comeout-Kräfte nicht mehr vorhanden und die bestehenden Kontaktflächen, insbesondere an den 3 Enden der 3R-Radialschlitze, erlauben eine optimale Verteilung der Drehmomente auf den maximalen Durchmesser des Schraubenkopfes.
- Entgegen der Auswurfkräfte bei Kreuzschlitzschrauben ist der Zentrier-Anpressdruck bei dieser Erfindung minimal und nicht proportional mit wachsenden Drehmomenten.
- Diese Erfindung ist anwendbar für den Ersatz von Kreuzschlitzschrauben sowie der Erneuerung von vorhandenen konischen Senkschrauben, Zylinderschrauben, Halbrundkopfschrauben sowie Linsensenkkopfschrauben und analogen angepassten Erzeugnissen nach DIN- und ISO- sowie nach anderen nach nichtmetrischen Normen. Somit sind diese neuen 3R-Radialschlitzschraubentypen mit einheitlichen 3R-Bits für die gleichen Schraubenkaliber ausgerüstet, was deren vereinfachten und polyvalenten Anwendungen bei den genannten und erneuerten Schraubentypen ermöglicht.
- Durch die Herstellung dieser Schraubenerfindung sowie der dazu vorgesehenen Schraubendreher- und Bitspitzen ist annehmbar, dass die erneuerten 3R-Radialschlitzschraubentypen gegenüber den Kreuzschlitzschrauben und analogen Produkten viel mehr an Bedeutung und an Anwendung gewinnen können, und dies in Bezug auf die gesicherte Zentrierung sowie der Nutzung der maximalen Schraubenkopfdurchmesser zwecks Verminderung der angewandten Drehkräfte.
- Dank dieser Erfindung von 3R-Radialschlitzschrauben ist die umfangreiche Anwendung von genormten Zentrierhülsen nicht mehr notwendig: dadurch entstehen für diese Schraubentypen Kosten-, Zeit- und Montagevorteile.
- Auf Grund der vorhandenen halbkugelförmigen Zentrierfläche (15) auf den Schraubenköpfen dieser 3R-Radialschlitzschrauben ist die Werkzeugpositionierung mit manuellen Schraubdrehern und Industrierobotern beim Einschrauben wie bei Demontageprozessen mit geringem Realisierungsaufwand erreicht.
- Durch die Nutzung der vollen Radien der Schraubenköpfe und deren Aufteilung auf 3 x 120° ist die Kräfteverteilung (insbesondere bei konischen Senkschrauben) auf die annehmbaren maximalen Leistungen angepasst und dies mit dem Ziel, selbst bei kurzzeitigen Überlastungen die Kraftübertragungsflächen vor der Zerstörung zu schützen.
- Zwecks Erhöhung der Sicherung des Zentrierungsvorganges werden die 3 Hälften der Schlitzwändeflächen (9) in parallelem Bezug zur Längsachse des 3R-Schlitzes in einem Winkel von 0° bis 20°, bevorzugt 3°, erstellt und dies zur Erleichterung der Einfügung der Zentrierflächen (5) und der vertikalen Schraubdruckflächen (1) der aufzunehmenden Schraubendreher- / Bitspitze in den 3R-Schlitz. Diese Anpassung garantiert somit den vollen parallelen Kontakt der Schraubdruckflächen (1) der Bits mit den Schlitzflächen (9) der 3R-Radialschlitzschraube, was zu einer maximalen Übertragung der Drehkräfte auf die gesamten vorhandenen Kontaktflächen ermöglicht. (Siehe Darstellung von Blatt 9 - A: Detail / Prinzip der Zentrierung von 3R-Radialschlitzschrauben).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
**Blatt 1 - A**
   Darstellung der Erfindungsausführung Typ A mit folgenden Zeichnungen:
   - **Fig.1**: Schnitt A - A der Diametralschlitzschraube ohne konischem Schraubunterkopf mit den nach aussen geneigten Grundflächen (10) des Diametralschlitzes sowie der halbrunden Zentrierfläche (5) und der halbkugelförmigen Zentrierfläche (15).
   - **Fig. 2**: Horizontale Aufsicht auf genannte Schraubenoberfläche (8) mit (oder ohne) der halbkugelförmigen Zentrierfläche (15) und der geneigten (10) und der halbrunden Zentrierfläche (12).
   - **Fig. 3**: Schnitt B - B mit Einsicht in die Tiefe der Diametralschnittflächen (9,10) und (12) sowie der Auflage der Schraubendreher- / Bitspitze auf der halbkugelförmigen Zentrierfläche bei einem Winkel von 90° zur Längsachse der Diametralschlitzfläche.
   - **Fig. 4**: Schnitt A - A wie Fig. 1 jedoch für die Diametralschlitz-Senkschraube mit konischem Schraubunterkopf und Anpassung des Schraubendreher-/ Bitspitzes (1) an die konische Senkform mittels der auf 45° geneigten Eckflächen (16).

   - **Fig. 5**: Horizontale Aufsicht auf genannte Schraubenoberfläche (8) mit (oder ohne) der halbkugelförmigen Zentrierfläche (15) und der geneigten (10) und der halbrunden Zentrierfläche (12).
   - **Fig. 6**: Schnitt B - B mit Einsicht in die Tiefe der Diametralschnittflächen (9) und (12) für die Diametralschlitz-Senkschraube mit konischem Unterkopf sowie der Auflage der Schraubendreher- / Bitspitze auf der halbkugelförmigen Zentrierfläche bei einem Winkel von 90° zur Längsachse der Diametralschlitzfläche.
**Blatt 2 - B**
   Darstellung der Erfindungsausführung Typ B mit folgenden Zeichnungen:
   - **Fig.7**: Schnitt A - A der Diametralschlitzschraube ohne konischem Schraubunterkopf mit den horizontalen Grundflächen (10) des Diametralschlitzes sowie der halbrunden Zentrierfläche (5) und (oder ohne) der halbkugelförmigen Zentrierfläche (15).
   - **Fig. 8**: Horizontale Aufsicht auf genannte Schraubenoberfläche (8) mit (oder ohne) der halbkugelförmigen Zentrierfläche (5) und der horizontalen (10) und der halbrunden Zentrierfläche (12).
   - **Fig. 9**: Schnitt B- B mit Einsicht in die Tiefe der Diametralschnittflächen (9,10) und (12) sowie der Auflage der Schraubendreher- / Bitspitze auf der halbkugelförmigen Zentrierfläche bei einem Winkel von 90° zur Längsachse der Diametralschlitzfläche.
   - **Fig. 10**: Angabe des Schraubendreher- / Bitspitzes (1) mit den angepassten auf 45° geneigten Ecken (16) als Variante für die Anwendung bei Schrauben mit und ohne konischem Unterkopf.
   - **Fig. 11**: Schnitt A - A wie Fig. 1 jedoch für die Diametralschlitz-Senkschraube mit konischem Schraubunterkopf und Anpassung des Schraubendreher- / Bitspitzes (1) an die konische Senkform mittels der auf 45° geneigten und angepassten Eckflächen (16).
   - **Fig. 12**: Horizontale Aufsicht auf genannte Schraubenoberfläche (8) mit (oder ohne) der halbkugelförmigen Zentrierfläche (15) und der horizontalen (10) und der halbrunden Zentrierfläche (12).
   - **Fig. 13**: Schnitt B - B mit Einsicht in die Tiefe der Diametralschnittflächen (10) und (12) für die Diametralschlitz-Senkschraube mit konischem Unterkopf sowie der Auflage der Schraubendreher- / Bitspitze auf (oder ohne) der halbkugelförmigen Zentrierfläche bei einem Winkel von 90° zur Längsachse der Diametralschlitzfläche.
**Blatt 3 - A / B**
   Darstellung der Erfindungsausführungen A und B bezüglich des Winkels der vertikalen bzw. parallelen Diametral-Schraubenschlitzflächen (9) bei einer Erweiterung von 3° im Bereich von 0° bis 20°.
   - **Fig. 14 / 16**: Schnitt A-A analog der vorangehenden Darstellungen.
   - **Fig. 15 / 17**: Horizontale Aufsicht auf genannte Schraubenoberflächen (8) mit (oder ohne) den halbkugelförmigen Zentrierflächen (15) und der inneren Schlitzflächen (9,10) und der halbrunden Zentrierflächen (12). Durch die Erweiterung des Winkels der inneren Schlitzflächen (9) in parallelem Bezug zur Längsachse des Diametralschlitzes wird der Eintritt der Schraubendreher- / Bitspitzen in den Diametralschlitz nach einem max. Drehwinkel von 180° (= +/- 90°) vorpositioniert. **(Siehe Detail Blatt 10 - A / B).**
**Blatt 4 - A:**
   Darstellung der Erfindungsausführungen der Versionen A mit Anpassung der Schraubenschlitze der Zylinderkopfschraube an den für die konische Senkschraube ausgeführten Bit mit den zu 45° geneigten Eckflächen (16), welche den Aussenflächen (19) bei der genannten Zylinderkopfschraube entsprechen.

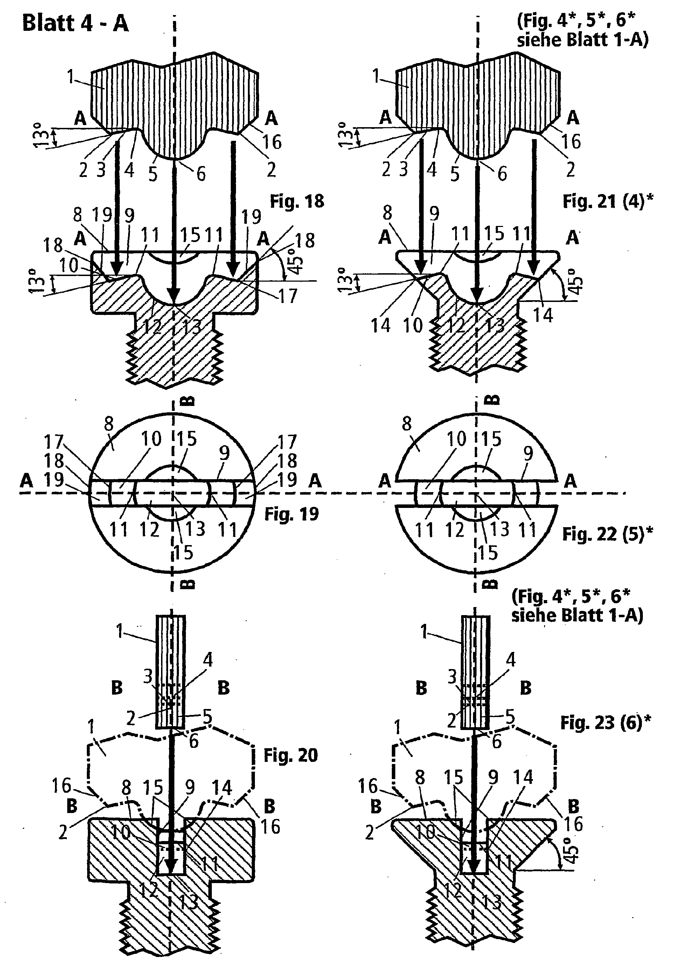

   - **Fig. 18**: Schnitt A - A der zylindrischen Diametralschlitzschraube mit den nach aussen geneigten Grundflächen (10) des Diametralschlitzes und der um 45° geneigten Eckflächen (19) sowie der halbrunden Zentrierfläche des Bits (5) und der halbkugelförmigen Zentrierfläche des Schraubenkopfes (15).
   - **Fig. 19**: Horizontale Aufsicht auf genannte Schraubenoberfläche (8) mit der halbkugelförmigen Zentrierfläche (15) und der nach aussen geneigten Schlitzgrundfläche (10), der um 45° geneigten Eckflächen (19) sowie der halbrunden Zentrierfläche (12).
   - **Fig. 20**: Schnitt B - B mit Einsicht in die Tiefe der Diametralschlitzflächen (9,10) und (12) sowie der Auflage der Schraubendreher- / Bitspitze auf der halbkugelförmigen Zentrierfläche (15) bei einem Winkel von 90° zur Längsachse der Diametralschlitzfläche.
   - **Fig. 21-23**: entsprechen den gleichwertigen Darstellungen und Angaben als Anwendungsreferenzen zu den Fig. 4, 5 und 6 von Blatt 1 - A. Sie dienen somit als Grundlage des A - Bits für die konische Senkschraube (Blatt 1 - A) und dessen Anwendung als polyvalente Bitspitze für angepasste Zylinderkopf- und Halbrundkopfschrauben, was die Nutzung dieses Bits für genannte Schraubentypen (inkl. Linsensenkkopfschrauben) bei gleichen Kalibern ermöglicht.
**Blatt 5 - A:**
   Darstellung der Erfindungsausführungen der Versionen A mit Anpassung der Schraubenschlitze der Halbrundkopfschraube an den für die konische Senkschraube ausgeführten Bit mit den zu 45° geneigten Eckflächen (16), welche den Aussenflächen (19) bei der genannten Halbrundkopfschraube entsprechen.

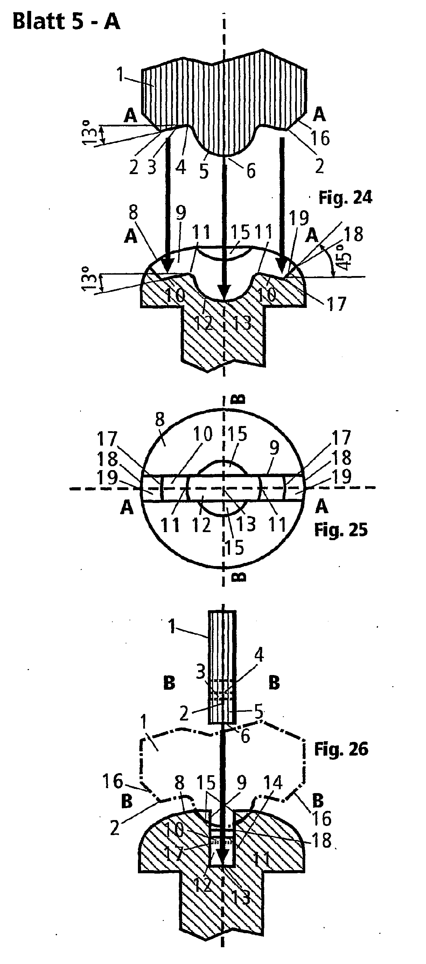

   - **Fig.24**: Schnitt A - A der Halbrundkopf- Diametralschlitzschraube mit den nach aussen geneigten Grundflächen (10) des Diametralschlitzes und der um 45° geneigten Eckflächen (19) sowie der halbrunden Zentrierfläche des Bits (5) und der halbkugelförmigen Zentrierfläche des Schraubenkopfes (15).
   - **Fig. 25**: Horizontale Aufsicht auf genannte Schraubenoberfläche (8) mit der halbkugelförmigen Zentrierfläche (15) und der nach aussen geneigten Schlitzgrundfläche (10), der um 45° geneigten Eckflächen (19) sowie der halbrunden Zentrierfläche (12).
   - **Fig. 26**: Schnitt B - B mit Einsicht in die Tiefe der Diametraischlitzflächen (9,10) und (12) sowie der Auflage der Schraubendreher- / Bitspitze auf der halbkugelförmigen Zentrierfläche (15) bei einem Winkel von 90° zur Längsachse der Diametralschlitzfläche.
**Blatt 6 - A: Zentrierung von konischen 3R-Radialschlitz-Senkschrauben.**
   1. Auflage der 3R-Bitspitze auf die halbkugelförmige Zentrierfläche (15).

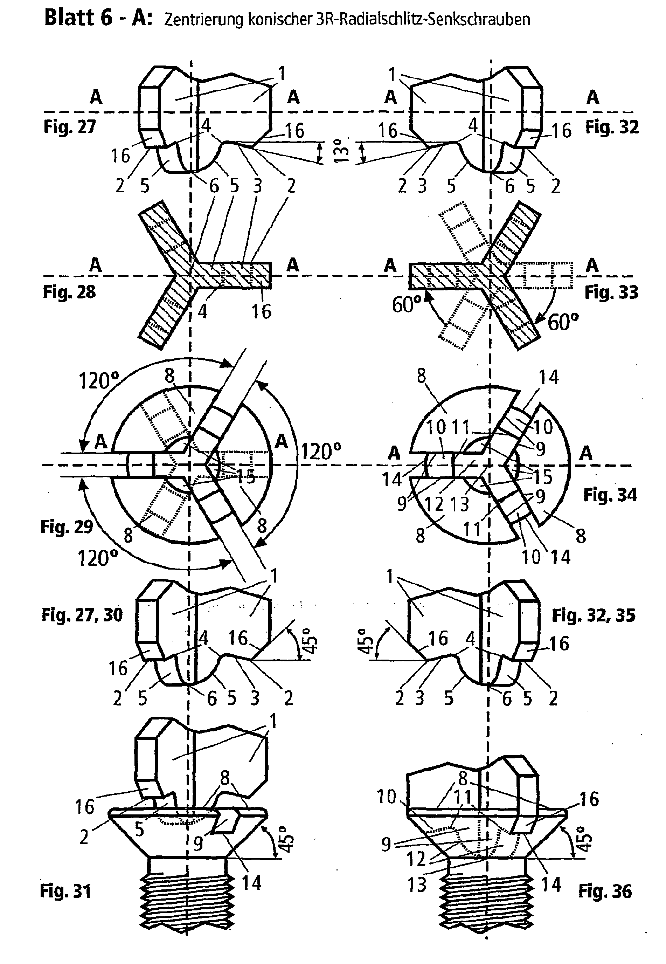

      - **Fig. 27**: Frontale Ansicht der 3R-Bitspitze zur Auflage auf die halbkugelförmigen 3 Zentrierflächenteile (15) auf dem Schraubenkopf.
      - **Fig. 28**: Darstellung des Horizontalschnittes A-A des 3R-Bits für seine Positionierung auf dem Schraubenkopf.
      - **Fig. 29**: Aufsicht auf den Schraubenkopf der konischen 3R-Senkschraube mit den 3 Einheiten der Schraubenkopfoberfläche (8) sowie der Positionierung des 3R-Bits (Fig. 28). **Siehe Detaildarstellung Blatt 9-A!**
      - **Fig. 30**: Frontale Darstellung der 3R-Bitspitze (Fig. 27) vor seiner Auflage auf der konischen 3R-Senkschraube.
      - **Fig. 31**: Frontale Ansicht der konischen 3R-Senkschraube mit dem aufliegenden 3R-Bit.
   2. Drehung um 60° der 3R-Bitspitze auf die halbkugelförmige Zentrierfläche (15) und Senkung in die 3R-Radialschlitzschraubenflächen (9).
      - **Fig. 32**: Darstellung der gleichen 3R-Bitspitze (Fig. 27) nach dessen Drehung im Uhrzeigersinn um 60°.
      - **Fig. 33**: Horizontalschnitt A-A- des 3R-Bits nach seiner Drehung von 60°.
      - **Fig. 34**: Aufsicht auf den Schraubenkopf der konischen 3R-Senkschraube mit den 3 Einheiten der Schraubenkopfoberflächen (8) welche nach der Drehung des 3R-Bits um 60° dessen Senkung in die 3R-Radialschraubenschlitzflächen (9) erreichen. **Siehe Detaildarstellung Blatt 9-A!**
      - **Fig. 35**: Darstellung der gleichen 3R-Bitspitze (Fig. 27) nach dessen Drehung im Uhrzeigersinn um 60°.
      - **Fig. 36**: Frontale Darstellung des positionierten und eingesenkten 3R-Bits- in den 3R-Radialschraubenschlitzflächen (9).
**Blatt 7 - A: Zentrierung von zylindrischen 3R-Radialschlitzschrauben.**
   1. Auflage der 3R-Bitspitze auf die halbkugelförmige Zentrierfläche (15).

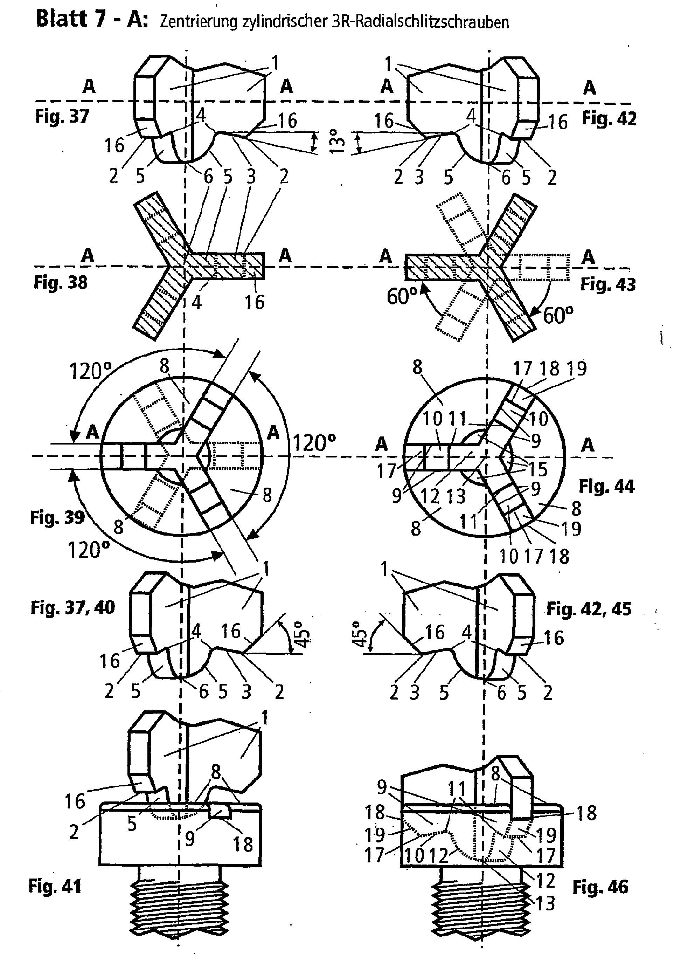

      - **Fig. 37**: Ansicht der 3R-Bitspitze analog zu Fig. 27 von Blatt 6 - A.
      - **Fig. 38**: Darstellung des Horizontalschnittes A-A des 3R-Bits analog zu Fig. 28 von Blatt 6 - A.
      - **Fig. 39**: Aufsicht auf den Schraubenkopf der zylindrischen 3R-Radialschlitzschraube mit den 3 Einheiten der Schraubenkopfoberfläche (8) sowie der Positionierung des 3R-Bits (Fig. 38). Siehe Blatt 9-A!
      - **Fig. 40**: Ansicht der 3R-Bitspitze analog zu Fig. 27 von Blatt 6 - A.
      - **Fig. 41**: Frontale Ansicht der zylindrischen 3R-Radialschlitzschraube mit dem aufliegenden 3R-Bit.
   2. Drehung um 60° der 3R-Bitspitze auf die halbkugelförmige Zentrierfläche (15) und Senkung in die 3R-Radialschlitzschraubenflächen (9).
      - **Fig. 42**: Darstellung der gleichen 3R-Bitspitze (Fig. 27) nach dessen Drehung im Uhrzeigersinn um 60°.
      - **Fig. 43**: Horizontalschnitt A-A- des 3R-Bits nach seiner Drehung von 60°.
      - **Fig. 44**: Aufsicht auf den Schraubenkopf der zylindrischen 3R-Radialschlitzschraube mit den 3 Einheiten der Schraubenkopfoberflächen (8) welche nach der Drehung des 3R-Bits um 60° dessen Senkung in die 3R-Radialschraubenschlitzflächen (9) erreichen. Siehe Blatt 9-A!
      - **Fig. 45**: Darstellung der gleichen 3R-Bitspitze (Fig. 42) nach dessen Drehung im Uhrzeigersinn um 60°.
      - **Fig. 46**: Frontale Darstellung des positionierten und eingesenkten 3R-Bits in den 3R-Radialschlitzschraubenflächen (9).
**Blatt 8 - A: Zentrierung von halbrundköpfigen 3R-Radialschlitzschrauben.**
   Auflage der 3R-Bitspitze auf die halbkugelförmige Zentrierfläche (15).

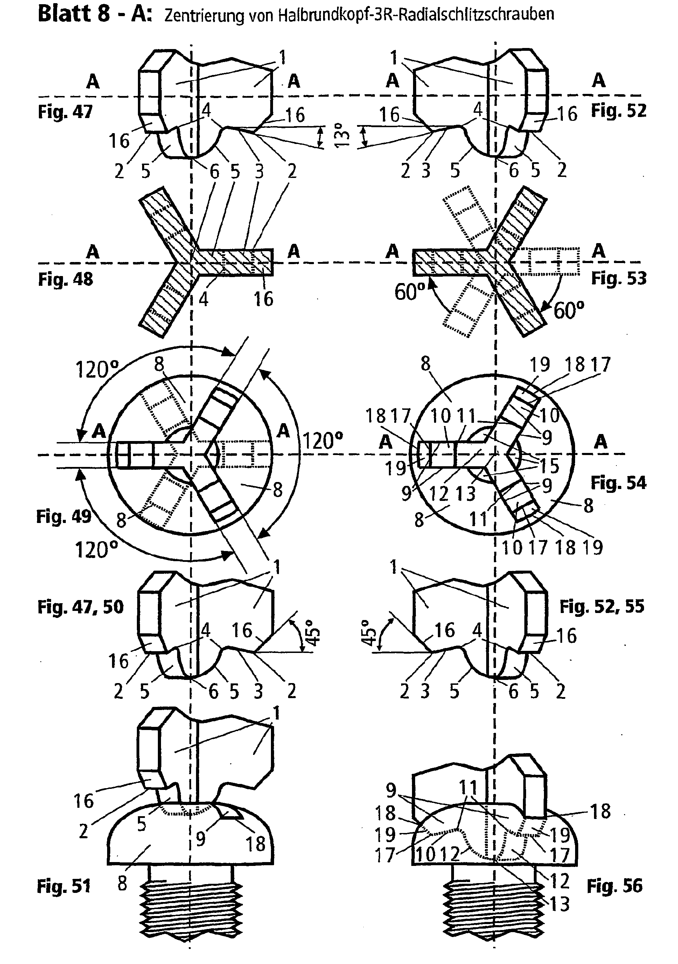

   - **Fig. 47**: Ansicht der 3R-Bitspitze analog zu Fig. 27 von Blatt 6 - A.
   - **Fig. 48**: Darstellung des Horizontalschnittes A-A des 3R-Bits analog zu Fig. 28 von Blatt 6 - A.
   - **Fig. 49**: Aufsicht auf den Schraubenkopf der halbrundköpfigen 3R-Radialschlitzschraube mit den 3 Einheiten der Schraubenkopfoberfläche (8) sowie der Positionierung des 3R-Bits (Fig. 48). **Siehe Detail Blatt 9-A!**
   - **Fig. 50**: Frontale Darstellung der 3R-Bitspitze (Fig. 47) vor seiner Auflage auf der halbrundköpfigen 3R-Radiaischlitzschraube.
   - **Fig. 51**: Frontale Ansicht der halbrundköpfigen 3R-Radialschlitzschraube mit dem aufliegenden 3R-Bit.

   Drehung um 60° der 3R-Bitspitze auf die halbkugelförmige Zentrierfläche (15) und Senkung in die 3R-Radialschlitzschraubenflächen (9).
   - **Fig. 52**: Darstellung der gleichen 3R-Bitspitze (Fig. 47) nach dessen Drehung im Uhrzeigersinn um 60°.
   - **Fig. 53**: Horizontalschnitt A-A- des 3R-Bits nach seiner Drehung von 60°.
   - **Fig. 54**: Aufsicht auf den Schraubenkopf der halbrundköpfigen 3R-Radialschlitzschraube mit den 3 Einheiten der Schraubenkopfoberflächen (8) welche nach der Drehung des 3R-Bits um 60° dessen Senkung in die 3R-Radialschraubenschlitzflächen (9) erreichen. **Siehe Detail Blatt 9-A!**
   - **Fig. 55**: Frontale Darstellung der 3R-Bitspitze (Fig. 52) vor seiner Senkung in die konische 3R-Radialschlitz-Senkschraube.
   - **Fig. 56**: Frontale Darstellung des positionierten und eingesenkten 3R-Bits in den 3R-Radialschraubenschlitzflächen (9).
**Blatt 9 - A: Detail / Prinzip der Zentrierung von 3R-Radialschlitzschrauben**

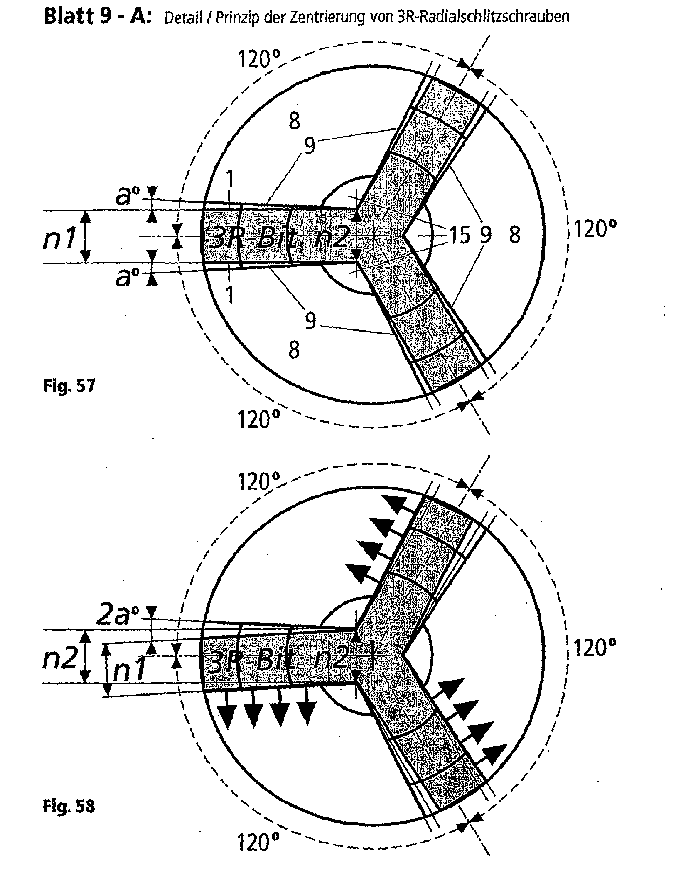

   - **Fig. 57**: Darstellung der Einfügung des 3R-Bits in die 3R-Radialschlitzflächen des Schraubenkopfes mit den Freiflächen, welche durch die beiden a°-Winkel entstehen.
   - **Fig. 58**: Darstellung der Auflage der Bit-Schlitzflächen (1) in direktem Kontakt mit den 3R-Radialsschlitzschraubenflächen (9) nach der Drehung des 3R-Bits um den a°-Winkel.
**Blatt 10 - A: Detail / Prinzip der Zentrierung von Diametralschlitzschrauben**

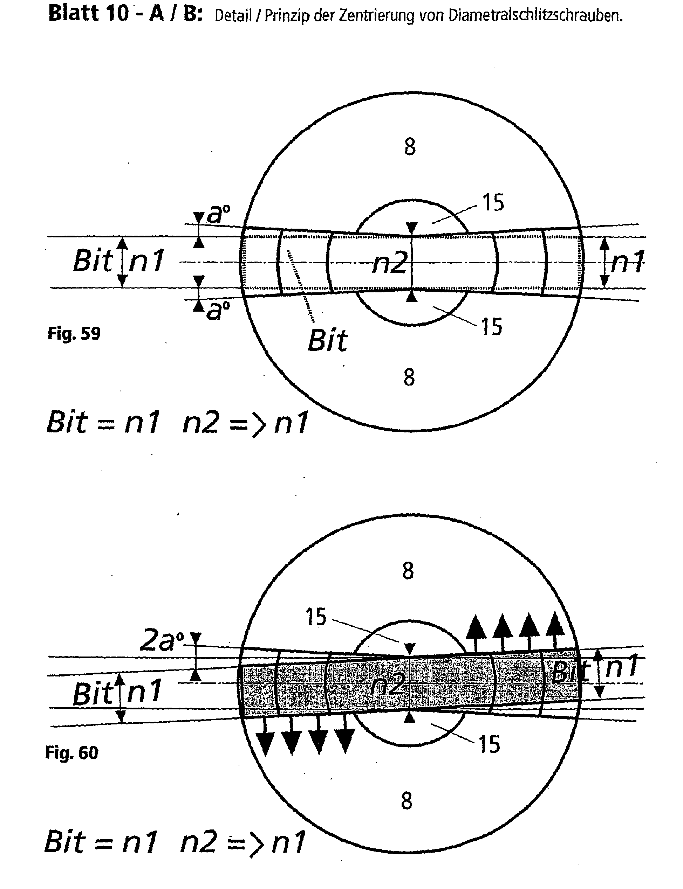

   - **Fig. 59**: Darstellung der Einfügung des Diametral-Schlitzschrauben-Bits in die Diametralschlitzflächen des Schraubenkopfes mit den Freiflächen, welche durch die beiden a°-Winkel entstehen.
   - **Fig. 60**: Darstellung der Auflage der Bit-Schlitzflächen in direktem Kontakt mit den Diametralschlitzschraubenflächen nach der Drehung des Bits um den a°-Winkel.

### Wege zur Ausführung der Erfindung

### Blatt 1 - A:

### Diese Grundzeichnungen umfassen die Diametral-Schlitzschraubentypen der Erfindungsdarstellung für Schrauben der Ausführung A mit und ohne konischem Schraubkopfunterteil.

**Fig. 1** ist die Darstellung des entsprechen Schraubendreher- / Bitspitzes, wobei die vertikale bzw. parallele Übertragungsfläche (1) durch die schräge Auflagefläche (3), der halbrunden Zentrierspitze (5) und der Ansatzwinkelabrundung (4) sowie dem tiefsten inneren Zentrierpunkt (6) begrenzt wird. (2) Stellt die tiefsten äusseren Ecken des Schraubendreher- / Bitspitzes dar, welcher mit dem äusseren Ende (14) des Diametralschlitzes entspricht. Mittels der Darstellung der Einfügungsrichtung in den Diametralschlitz der Schraube (durch die vorhandenen Pfeile) wird die Zentrierung und volle Anteilverbindung des Schraubendreher- / Bitspitzes festgelegt.

Gemäss Fig. 1 ist der Schnitt A-A der Schraube dargestellt, wobei die Schraubenkopfoberfläche (8) mit (oder ohne) der halbkugelförmigen Zentrierfläche (15) sowie die inneren Schlitzwändeflächen (9), die geneigte Grundebene des Diametralschlitzes (10) sowie die halbkreisförmige Zentrierfläche (12) und deren tiefster Zentrierpunkt (13) bezeichnet werden. Zwecks Verminderung der Punktspannungen ist bei der halbkreisförmigen Zentrierfläche (12) deren Ansatz zur geneigten Grundebene (10) des Diametralschlitzes durch 2 Abrundungen (11) am höchsten Punkt des Ansatzwinkels vorgesehen und der tiefste Punkt der Schräglage ist durch (14) dargestellt.

**Fig. 2** stellt die Aufsicht zur Diametralschlitzschraube ohne konischem Schraubunterkopf dar, wobei die Schrauboberfläche (8), die vertikalen bzw. parallelen Schlitzwände (9) sowie die inneren Flächenteile (11, 12, 13) des Diametralschlitzes und die Teile der (oder ohne der) ausgeführten halbkugelförmigen Zentrierfläche (15) bezeichnet werden.

**Fig. 3** betrifft den Schnitt B-B mit der Darstellung der Schraubendreher- / Bitspitze bei der Auflage der letzterer auf (oder ohne) den halbkugelförmigen Zentrierflächenteilen (15) mit einem Winkel von 90° zur Längsachse der Diametralschlitzfläche. Durch diese vorhandenen (oder nicht vorhandenen) halbkugeligen Zentrierflächen (15) wird der Eintritt der Schraubendreher- / Bitspitzen in den Diametralschlitz nach einem maximalen Drehwinkel von 180° (= +/- 90°) vorpositioniert.

**Fig. 4** ist im Schnitt A-A analog zu Fig.1, jedoch mit dem Unterschied der Darstellung des Diametral-Schlitzschraubentyps mit konischem Schraubenkopfunterteil.

Sämtliche Teilbezeichnungen stimmen mit den Angaben von Fig. 1 überein, mit Ausnahme der angepassten Eckflächen (16) des Schraubendreher- / Bitspitzes (1) zur Anpassung an die äusseren (14) geneigten Grundflächen (10).

**Fig. 5** stellt wie Fig. 2 die analoge Aufsicht zur Diametralschlitzschraube mit konischem Schraubunterkopf dar, wobei die Schrauboberfläche (8), die vertikalen bzw. parallelen Schlitzwände (9) sowie die inneren Flächenteile (11, 12, 13) des Diametralschlitzes und die Teile der (oder nicht) ausgeführten halbkugelförmigen Zentrierflächen (15) bezeichnet werden.

**Fig. 6** stellt wie Fig. 3 den Schnitt B-B mit der Darstellung der Schraubendreher- / Bitspitze (1) dar, wobei letztere bei der Auflage (oder nicht) auf den halbkugelförmigen Zentrierflächenteilen (15) mit einem Winkel von 90° zur Längsachse der Diametralschlitzfläche (oder nicht) positioniert wird.

Mit diesen halbkugeligen Zentrierflächen (15) wird der Eintritt der Schraubendreher- / Bitspitzen in den Diametralschlitz nach einem maximalen Drehwinkel von 180° (= +/- 90°) vorzentriert.

### Blatt 2 - B:

### Diese Grundzeichnungen umfassen die Diametral-Schlitzschraubentypen der Erfindungsdarstellung für Schrauben der Ausführung B mit und ohne konischem Schraubkopfunterteil.

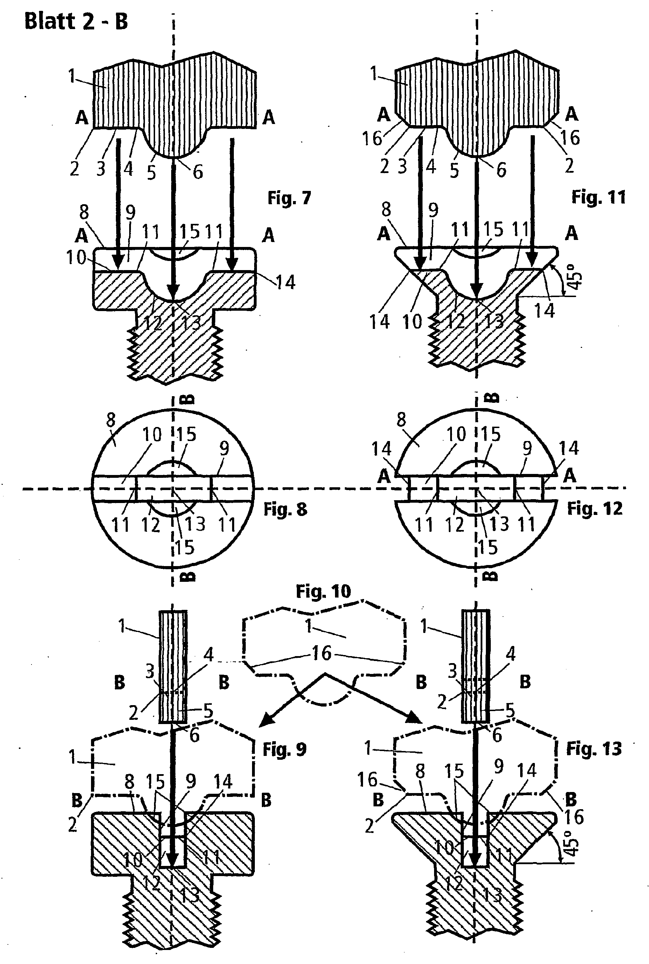

**Fig. 7** ist die Darstellung des entsprechenden Schraubendreherspitzes bzw. des Bits, wobei die vertikale bzw. parallele Übertragungsfläche (1) durch die horizontale Auflagefläche (3), die halbrunde Zentrierspitze (5) und die Ansatzwinkelabrundung (4) sowie den tiefsten inneren Zentrierpunkt (6) begrenzt wird. (2) stellt die tiefsten äusseren Ecken des Schraubendreher- / Bitspitzes dar, welcher dem äusseren Ende (14) des Diametralschlitzes entspricht.

Mittels der Darstellung der Einfügungsrichtung in den Diametralschlitz der Schraube (durch die vorhandenen Pfeile) wird die Zentrierung und volle Anteilverbindung des Schraubendreher- / Bitspitzes festgelegt.

Gemäss Fig. 7 ist der Schnitt A-A der Schraube dargestellt, wobei die Schraubenkopfoberfläche (8) mit (oder ohne) den halbkugelförmigen Zentrierflächen (15) sowie die inneren Schlitzwändeflächen (9), die horizontale Grundebene (10) des Diametraischlitzes sowie die halbkreisförmige Zentrierfläche (12) und deren tiefster Zentrierpunkt (13) bezeichnet werden. Zwecks Verminderung der Punktspannungen ist bei der halbkreisförmigen Zentrierfläche (12) deren Ansatz zur horizontalen Grundebene (10) des Diametralschlitzes durch 2 Abrundungen (11) am höchsten Punkt des Ansatzwinkels vorgesehen und der äusserste Punkt der horizontalen Ebene ist durch (14) dargestellt.

**Fig. 8** stellt die Aufsicht zur Diametralschlitzschraube ohne konischem Schraubunterkopf dar, wobei die Schrauboberfläche (8), die vertikalen bzw. parallelen Schlitzwände (9) sowie die inneren Flächenteile (11, 12, 13) des Diametralschlitzes und die (oder nicht) halbkugelförmigen Zentrierflächen (15) bezeichnet werden.

**Fig. 9** betrifft den Schnitt B-B mit der Darstellung der Schraubendreher- / Bitspitze bei der Auflage der letzteren auf den halbkugelförmigen Zentrierflächenteilen (15) mit einem Winkel von 90° zur Längsachse der Diametralschlitzfläche. Durch diese halbkugeligen Zentrierflächen (15) wird der Eintritt der Schraubendreher- / Bitspitzen in den Diametralschlitz nach einem maximalen Drehwinkel von 180° (= +/- 90°) vorpositioniert.

**Fig. 11** ist im Schnitt A-A analog zu Fig. 7, jedoch mit dem Unterschied der Darstellung des Diametral-Schlitzschraubentyps mit konischem Schraubenkopfunterteil. Sämtliche Teilbezeichnungen stimmen mit den Angaben von Fig. 7 überein, mit Ausnahme der angepassten Eckflächen (16) des Schraubendreher- / Bitspitzes (1) zur Anpassung an die äusseren (14) horizontalen Grundflächen (10).

**Fig. 12** stellt wie Fig. 8 die analoge Aufsicht zur Diametralschlitzschraube mit konischem Schraubunterkopf dar, wobei die Schrauboberfläche (8), die vertikalen bzw. parallelen Schlitzwände (9) sowie die inneren Flächenteile (11, 12, 13) des Diametralschlitzes und (oder ohne) die ausgeführten halbkugelförmigen Zentrierflächen (15) bezeichnet werden.

**Fig. 13** betrifft wie Fig. 9 den Schnitt B-B mit der Darstellung der Schraubendreher- / Bitspitze bei der Auflage der letzteren auf (oder ohne) den halbkugelförmigen Zentrierflächenteilen (15) mit einem Winkel von 90° zur Längsachse der Diametralschlitzfläche. Durch diese (oder ohne) halbkugeligen Zentrierflächen (15) wird der Eintritt der Schraubendreher- / Bitspitzen in den Diametralschlitz nach einem maximalen Drehwinkel von 180° (= +/-90°) vorpositioniert.

**Fig. 10** - Angabe des Schraubendreher- / Bitspitzes (1) mit den angepassten auf 45° geneigten Ecken (16) als Variante für die Anwendung bei Schrauben mit und ohne konischem Unterkopf.

### Blatt 3 - A / B:

### Darstellung der Erfindungsausführungen A und B bezüglich des Winkels der vertikalen Diametral-Schraubenschlitzflächen (9) bei einer Erweiterung von 3° im Bereich von 0° bis 20°.

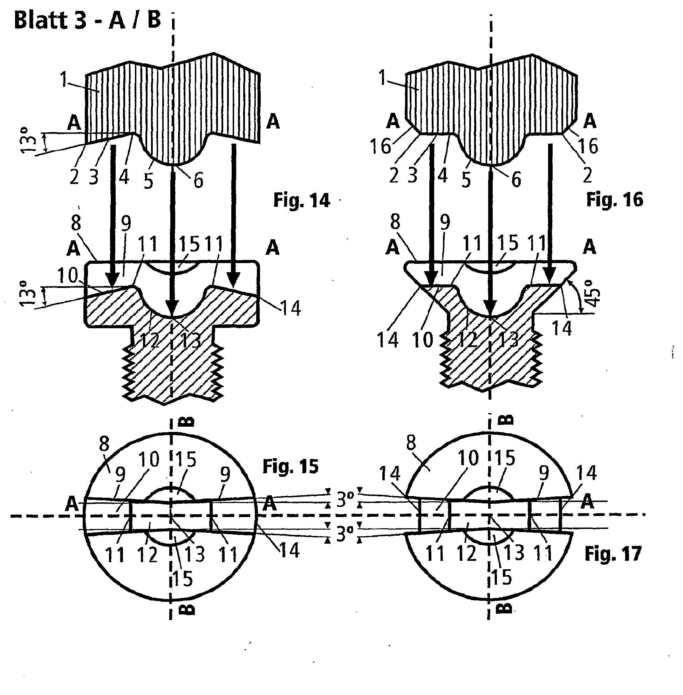

**Fig. 14 / 16** - Schnitt A - A analog der vorangehenden Darstellungen.

**Fig. 15 / 17** - Horizontale Aufsicht auf genannte Schraubenoberflächen (8) mit den halbkugelförmigen Zentrierflächen (15) und der inneren Schlitzflächen (10) und der halbrunden Zentrierflächen (12). Durch Erweiterung des Winkels der inneren Schlitzflächen (9) in parallelem Bezug zur Längsachse des Diametralschlitzes wird der Eintritt der Schraubendreher- / Bitspitzen in den Diametralschlitz nach einem max. Drehwinkel von 180° (= +/- 90°) positioniert. **(Siehe Detail Zentrierung und Kraftübertragung Blatt 10 - A / B).**

### Blatt 4 - A:

### Diese Grundzeichnungen umfassen die Diametral-Schlitzschraubentypen der Erfindungsdarstellung für Schrauben der Ausführung A mit und ohne konischem Schraubenkopfunterteil.

**Fig. 18** ist die Darstellung des entsprechen Schraubendreher- / Bitspitzes, wobei die vertikale bzw. parallele Übertragungsfläche (1) durch die schräge Auflagefläche (3), der halbrunden Zentrierspitze (5) und der Ansatzwinkelabrundung (4) sowie dem tiefsten inneren Zentrierpunkt (6) begrenzt wird. (2) Stellt die tiefsten äusseren Ecken des Schraubendreher- / Bitspitzes dar, welcher mit dem äusseren Ende (14) des Diametralschlitzes entspricht. Mittels der Darstellung der Einfügungsrichtung in den Diametralschlitz der Schraube (durch die vorhandenen Pfeile) wird die Zentrierung und volle Anteilverbindung des Schraubendreher- / Bitspitzes festgelegt.

Gemäss Fig. 18 ist der Schnitt A-A der Schraube dargestellt, wobei die Schraubenkopfoberfläche (8) mit der halbkugelförmigen Zentrierfläche (15) sowie die inneren Schlitzwändeflächen (9), die geneigte Grundebene des Diametralschlitzes (10), der äusseren um 45° geneigten Eckfläche (19) mit deren tiefsten (17) und höchsten Kanten (18) sowie die halbkreisförmige Zentrierfläche (12) und deren tiefster Zentrierpunkt (13) bezeichnet werden. Zwecks Verminderung der Punktspannungen ist bei der halbkreisförmigen Zentrierfläche (12) deren Ansatz zur geneigten Grundebene (10) des Diametralschlitzes durch 2 Abrundungen (11) am höchsten Punkt des Ansatzwinkels vorgesehen und der tiefste Punkt der Schräglage ist durch (17) dargestellt.

**Fig. 19** stellt die Aufsicht zur Diametralschlitzschraube ohne konischem Schraubunterkopf dar, wobei die Schrauboberfläche (8), die vertikalen bzw. parallelen Schlitzwände (9) sowie die inneren Flächenteile (11, 12, 13) des Diametralschlitzes und die Teile der ausgeführten halbkugelförmigen Zentrierfläche (15) bezeichnet werden.

**Fig. 20** betrifft den Schnitt B-B mit der Darstellung der Schraubendreher- / Bitspitze bei der Auflage der letzterer auf (oder ohne) den halbkugelförmigen Zentrierflächenteilen (15) mit einem Winkel von 90° zur Längsachse der Diametralschlitzfläche. Durch diese vorhandenen halbkugeligen Zentrierflächen (15) wird der Eintritt der Schraubendreher- / Bitspitzen in den Diametralschlitz nach einem maximalen Drehwinkel von 180° (= +/- 90°) vorpositioniert.

**Fig. 21, 22, 23** entsprechen den gleichwertigen Darstellungen und Angaben als Anwendungsreferenzen zu den Fig. 4, 5 und 6 von Blatt 1 - A. Sie dienen somit als Grundlage des A - Bits für die konische Senkschraube (Blatt 1 - A) und dessen Anwendung als polyvalente Bitspitze für angepasste Zylinderkopf-, Halbrundkopf- und Linsensenkkopfschrauben, was die Nutzung dieses Bits für genannte Schraubentypen bei gleichen Kalibern ermöglicht.

### Blatt 5 - A:

### Diese Grundzeichnungen umfassen die Diametral-Schlitzschraubentypen der Erfindungsdarstellung für Halbrundkopfschrauben der Ausführung A ohne konischem Schraubkopfunterteil.

**Fig. 24** ist die Darstellung des entsprechen Schraubendreher- / Bitspitzes, wobei die vertikale bzw. parallele Übertragungsfläche (1) durch die schräge Auflagefläche (3), der halbrunden Zentrierspitze (5) und der Ansatzwinkelabrundung (4) sowie dem tiefsten inneren Zentrierpunkt (6) begrenzt wird. (2) Stellt die tiefsten äusseren Ecken des Schraubendreher- / Bitspitzes dar, welcher mit dem äusseren Ende (14) des Diametralschlitzes entspricht. Mittels der Darstellung der Einfügungsrichtung in den Diametralschlitz der Schraube (durch die vorhandenen Pfeile) wird die Zentrierung und volle Anteilverbindung des Schraubendreher- / Bitspitzes festgelegt.

Gemäss Fig. 24 ist der Schnitt A-A der Schraube dargestellt, wobei die halbrunde Schraubenkopfoberfläche (8) mit der halbkugelförmigen Zentrierfläche (15) sowie die inneren Schlitzwändeflächen (9), die geneigte Grundebene des Diametralschlitzes (10), der äusseren um 45° geneigten Eckfläche (19) mit deren tiefsten (17) und höchsten Kanten (18) sowie die halbkreisförmige Zentrierfläche (12) und deren tiefster Zentrierpunkt (13) bezeichnet werden. Zwecks Verminderung der Punktspannungen ist bei der halbkreisförmigen Zentrierfläche (12) deren Ansatz zur geneigten Grundebene (10) des Diametralschlitzes durch 2 Abrundungen (11) am höchsten Punkt des Ansatzwinkels vorgesehen und der tiefste Punkt der Schräglage ist durch (17) dargestellt.

**Fig. 25** stellt die Aufsicht zur Diametralschlitzschraube ohne konischem Schraubunterkopf dar, wobei die halbrunde Schrauboberfläche (8), die vertikalen bzw. parallelen Schlitzwände (9) sowie die inneren Flächenteile (11, 12, 13) des Diametralschlitzes und die Teile der ausgeführten halbkugelförmigen Zentrierfläche (15) bezeichnet werden.

**Fig. 26** betrifft den Schnitt B-B mit der Darstellung der Schraubendreher- / Bitspitze bei der Auflage der letzterer auf den halbkugelförmigen Zentrierflächenteilen (15) mit einem Winkel von 90° zur Längsachse der Diametralschlitzfläche. Durch diese vorhandenen halbkugeligen Zentrierflächen (15) wird der Eintritt der Schraubendreher- / Bitspitzen in den Diametralschlitz nach einem maximalen Drehwinkel von 180° (= +/- 90°) vorpositioniert.

### Blatt 6 - A: Zentrierung konischer 3R-Radialschlitz-Senkschrauben:

### 1. Auflage der 3R-Bitspitzen auf den halbkugelförmigen Zentrierflächen (15).

**Fig. 27** ist die Darstellung des aus 3 halben Diametralschlitzen zusammengefügten und vertikal zentrierten Schraubendreher- / Bitspitzes, dessen einzelne vertikale bzw. parallele Kraftübertragungsflächen (1) ab dem tiefsten Punkt (6) der halbrunden Zentrierfläche (5) in einem horizontalen Orientierungswinkel von 120° ebenfalls auf vertikale Art zu einer Einheit verbunden sind. Somit verfügen diese einzelnen und identischen Bitflügel über eine tiefste äussere Kante (2) des Schraubendreher- / Bitspitzes, einer äussere Eckfläche von 45° (16), sowie eine nach aussen geneigte Auflagefläche (3), welche durch eine Ansatzwinkelabrundung (4) an die halbrunde Zentrierfläche (5) verbunden ist.

**Fig. 28** stellt den Horizontalschnitt A-A der Schraubendreher- / Bitspitze dar, dessen Anwendung bei der Auflage auf dem Schraubenkopf der konischen 3R-Radialschlitz-Senkschraube den Winkel zur Zentrierung festlegt.

**Fig. 29** stellt die vertikale Aufsicht auf den Schraubenkopf dar, wobei in gestrichelten Form der vorangekündigte Horizontalschnitt des 3R-Bits (Fig. 28), dessen symmetrische Zentrierung auf den einzelnen Schraubenkopfoberflächen (8) und dank der 3 einzelnen Teilen (15) der halbkugelförmigen Zentrierflächen ermöglicht und gesichert wird. **Siehe Detail Blatt 9-A!**

**Fig.30** ist die identische frontale Darstellung des 3R-Bits (Fig. 27) vor seiner Auflage auf den 3 einzelnen halbkugelförmigen Zentrierflächen (15), welche in der vertikal-axialen Mitte bei den 3 einzelnen Schraubenkopfflächen (8) eingefügt sind.

**Fig. 31** ist die frontale Darstellung des durch die halbkugelförmigen Zentrierflächen (15) aufliegenden 3R-Bits auf dem konischen 3R-Radialschlitz-Senkschraubenkopf. Nach dessen folgenden Drehung um 60° im Uhrzeigersinn werden die äusseren Eckflächen (16) in die noch offenen sichtbaren äusseren Schlitze (9) der vertikalen bzw. parallelen Kontaktflächen eingetragen.

### 2. Drehung um 60° der 3R-Bitspitze auf den 3 halbkugelförmigen Zentrierflächen (15) und Senkung in die 3R-Radialschlitzschraubenflächen (9).

**Fig. 32** Darstellung des Schraubendreher- / Bitspitzes gemäss Fig. 27, jedoch nach dessen Drehung auf 60° im Uhrzeigersinn.

**Fig. 33** stellt den Horizontalschnitt A-A der Schraubendreher- / Bitspitze dar, dessen Anwendung bei der Auflage und Drehung auf 60° im Uhrzeigersinn auf dem Schraubenkopf der konischen 3R-Radialschlitz-Senkschraube den Winkel zur Senkung festlegt.

**Fig 34** stellt die vertikale Aufsicht auf den Schraubenkopf dar, welcher die gleiche festgelegte Grundposition wie auf Fig. 29 verfügt und dank der 3 einzelnen Teilen (15) der halbkugelförmigen Zentrierflächen sowie der parallelen bzw. vertikalen Schlitzflächen (9) die Senkung des 3R-Bits ermöglicht. Somit wird der direkte Zentrierkontakt des 3R-Bits durch seine Auflage auf die nach aussen um 13° geneigten Flächen (10), der Aussenkanten (14), der höchsten Ansatzwinkelabrundungen (11), der halbrunden Zentrierflächen (12) sowie dem axialen Schraubenzentrum (13) festgelegt. **Siehe Detail Blatt 9-A!**

**Fig.35** ist die identische frontale Darstellung des 3R-Bits (Fig. 32) nach seiner Drehung im Uhrzeigersinn von 60° vor seiner Auflage auf den 3 einzelnen halbkugelförmigen Zentrierflächen (15).

**Fig. 36** ist die frontale Darstellung der Senkung des 3R-Schraubendreher- / Bitspitzes in die entsprechenden Schraubenschlitze. Somit ist die Zentrierung des 3R-Bits dank seiner direkten Auflage auf den geneigten Aussenflächen (10), der Ansatzwinkelabrundungen (11), des Schraubenkopfzentrums (13) sowie der halbrunden Zentrierflächen (12) gesichert.

### Blatt 7 - A: Zentrierung zylindrischer 3R-Radialschlitzschrauben:

### 1. Auflage der 3R-Bitspitzen auf den halbkugelförmigen Zentrierflächen (15).

**Fig. 37** ist die Darstellung des aus 3 halben Diametralschlitzen zusammengefügten und vertikal zentrierten Schraubendreher- / Bitspitzes, dessen einzelne vertikale bzw. parallele Kraftübertragungsflächen (1) ab dem tiefsten Punkt (6) der halbrunden Zentrierfläche (5) in einem horizontalen Orientierungswinkel von 120° ebenfalls auf vertikale Art zu einer Einheit verbunden sind. Somit verfügen diese einzelnen und identischen Bitflügel über eine tiefste äussere Kante (2) des Schraubendreher- / Bitspitzes, einer äussere Eckfläche von 45° (16), sowie eine nach aussen geneigte Auflagefläche (3), welche durch eine Ansatzwinkelabrundung (4) an die halbrunde Zentrierfläche (5) verbunden ist.

**Fig. 38** stellt den Horizontalschnitt A-A der Schraubendreher- / Bitspitze dar, dessen Anwendung bei der Auflage auf dem Schraubenkopf der zylindrischen 3R-Radialschlitzschraube den Winkel zur Zentrierung festlegt.

**Fig. 39** stellt die vertikale Aufsicht auf den Schraubenkopf dar, wobei in gestrichelten Form der vorangekündigte Horizontalschnitt des 3R-Bits (Fig. 28), dessen symmetrische Zentrierung auf den einzelnen Schraubenkopfoberflächen (8) und dank der 3 einzelnen Teilen (15) der halbkugelförmigen Zentrierflächen ermöglicht und gesichert wird. **Siehe Detail Blatt 9-A!**

**Fig.40** ist die identische frontale Darstellung des 3R-Bits (Fig. 37) vor seiner Auflage auf den 3 einzelnen halbkugelförmigen Zentrierflächen (15), welche in der vertikal-axialen Mitte bei den 3 einzelnen Schraubenkopfflächen (8) eingefügt sind.

**Fig. 41** ist die frontale Darstellung des durch die halbkugelförmigen Zentrierflächen (15) aufliegenden 3R-Bits auf dem zylindrischen 3R-Radialschlitzschraubenkopf. Nach dessen folgenden Drehung um 60° im Uhrzeigersinn werden die äusseren um 45° geneigten Eckflächen (16) in die noch offenen sichtbaren äusseren Schlitzen (9) der vertikalen bzw. parallelen Kontaktflächen eingetragen, wobei die äusseren Kanten (18) der entsprechenden um 45° geneigten Eckflächen (19) des Schraubenkopfes deren Aufnahme der 3R-Bit-Eckflächen (16) festlegen.

### 2. Drehung um 60° der 3R-Bitspitze auf den 3 halbkugelförmigen Zentrierflächen (15) und Senkung in die 3R-Radialschlitzschraubenflächen (9).

**Fig. 42** Darstellung des Schraubendreher- / Bitspitzes gemäss Fig. 37, jedoch nach dessen Drehung auf 60° im Uhrzeigersinn.

**Fig. 43** stellt den Horizontalschnitt A-A der Schraubendreher- / Bitspitze dar, dessen Anwendung bei der Auflage und Drehung auf 60° im Uhrzeigersinn auf dem Schraubenkopf der zylindrischen 3R-Radialschlitzschraube den Winkel für dessen Senkung festlegt.

**Fig 44** stellt die vertikale Aufsicht auf den Schraubenkopf dar, welcher die gleiche festgelegte Grundposition wie auf Fig. 39 verfügt und dank der 3 einzelnen Teile (15) der halbkugelförmigen Zentrierflächen sowie der parallelen bzw. vertikalen Schlitzflächen (9) die Senkung des 3R-Bits ermöglicht. Somit wird der direkte Zentrierkontakt des 3R-Bits durch seine Auflage auf die nach aussen um 13° geneigten Flächen (10), der Aussenkanten (18), der um 45° geneigten Eckflächen (19), der höchsten Ansatzwinkelabrundungen (17), der halbrunden Zentrierflächen (12) sowie dem axialen Schraubenzentrum (13) festgelegt. **Siehe Detail Blatt 9-A!**

**Fig.45** ist die identische frontale Darstellung des 3R-Bits (Fig. 42) nach seiner Drehung im Uhrzeigersinn von 60° vor seiner Auflage auf den 3 einzelnen halbkugelförmigen Zentrierflächen (15).

**Fig. 46** ist die frontale Darstellung der Senkung des 3R-Schraubendreher- / Bitspitzes in die entsprechenden Schraubenschlitze. Somit ist die Zentrierung des 3R-Bits dank seiner direkten Auflage auf den um 45° geneigten Eckflächen (19), der anschliessenden Flächenkanten (17), den nach aussen geneigten Flächen 10), der Ansatzwinkelabrundungen (11), des Schraubenkopfzentrums (13) sowie der halbrunden Zentrierflächen (12) gesichert. **Blatt 8 - A: Zentrierung halbrundköpfiger 3R-Radialschlitzschrauben:**

### 1. Auflage der 3R-Bitspitzen auf den halbkugelförmigen Zentrierflächen (15).

**Fig. 47** ist die Darstellung des aus 3 halben Diametralschlitzen zusammengefügten und vertikal zentrierten Schraubendreher- / Bitspitzes, dessen einzelne vertikale bzw. parallele Kraftübertragungsflächen (1) ab dem tiefsten Punkt (6) der halbrunden Zentrierfläche (5) in einem horizontalen Orientierungswinkel von 120° ebenfalls auf vertikale Art zu einer Einheit verbunden sind. Somit verfügen diese einzelnen und identischen Bitflügel über eine tiefste äussere Kante (2) des Schraubendreher- / Bitspitzes, einer äussere Eckfläche von 45° (16), sowie eine nach aussen geneigte Auflagefläche (3), welche durch eine Ansatzwinkelabrundung (4) an die halbrunde Zentrierfläche (5) verbunden ist.

**Fig. 48** stellt den Horizontalschnitt A-A der Schraubendreher- / Bitspitze dar, dessen Anwendung bei der Auflage auf dem Schraubenkopf der halbrundköpfigen 3R-Senkschraube den Winkel zur Zentrierung festlegt.

**Fig. 49** stellt die vertikale Aufsicht auf den Schraubenkopf dar, wobei in gestrichelten Form der vorangekündigte Horizontalschnitt des 3R-Bits (Fig. 48), dessen symmetrische Zentrierung auf den einzelnen Schraubenkopfoberflächen (8) und dank der 3 einzelnen Teilen (15) der halbkugelförmigen Zentrierflächen ermöglicht und gesichert wird. **Siehe Detail Blatt 9-A!**

**Fig.50** ist die identische frontale Darstellung des 3R-Bits (Fig. 47) vor seiner Auflage auf den 3 einzelnen halbkugelförmigen Zentrierflächen (15), welche in der vertikal-axialen Mitte bei den 3 einzelnen Schraubenkopfflächen (8) eingefügt sind.

**Fig. 51** ist die frontale Darstellung des durch die halbkugelförmigen Zentrierflächen (15) aufliegenden 3R-Bits auf dem halbrundköpfigen 3R-Radialschlitzschraubenkopf. Nach dessen folgenden Drehung um 60° im Uhrzeigersinn werden die äusseren um 45° geneigten Eckflächen (16) in die noch offenen sichtbaren äusseren Schlitzen (9) der vertikalen bzw. parallelen Kontaktflächen eingetragen, wobei die äusseren Kanten (18) der entsprechenden um 45° geneigten Eckflächen (19) des Schraubenkopfes deren Aufnahme der 3R-Bit-Eckflächen (16) festlegen.

### 2. Drehung um 60° der 3R-Bitspitze auf den 3 halbkugelförmigen Zentrierflächen (15) und Senkung in die 3R-Radialsschlitzschraubenflächen (9).

**Fig. 52** Darstellung des Schraubendreher- / Bitspitzes gemäss Fig. 47, jedoch nach dessen Drehung auf 60° im Uhrzeigersinn.

**Fig. 53** stellt den Horizontalschnitt A-A der Schraubendreher- / Bitspitze dar, dessen Anwendung bei der Auflage und Drehung auf 60° im Uhrzeigersinn auf dem Schraubenkopf der halbrundköpfigen 3R-Radialschlitzschraube den Winkel für dessen Senkung festlegt.

**Fig 54** stellt die vertikale Aufsicht auf den Schraubenkopf dar, welcher die gleiche festgelegte Grundposition wie auf Fig. 49 verfügt und dank der 3 einzelnen Teilen (15) der halbkugelförmigen Zentrierflächen sowie der parallelen bzw. Vertikalen Schlitzflächen (9) die Senkung des 3R-Bits ermöglicht. Somit wird der direkte Zentrierkontakt des 3R-Bits durch seine Auflage auf die nach aussen um 13° geneigten Flächen (10), der Aussenkanten (18), der um 45° geneigten Eckflächen (19), der höchsten Ansatzwinkelabrundungen (17), der halbrunden Zentrierflächen (12) sowie dem axialen Schraubenzentrum (13) festgelegt. **Siehe Detail Blatt 9-A!**

**Fig.55** ist die identische frontale Darstellung des 3R-Bits (Fig. 52) nach seiner Drehung im Uhrzeigersinn von 60° vor seiner Auflage auf den 3 einzelnen halbkugelförmigen Zentrierflächen (15).

**Fig. 56** ist die frontale Darstellung der Senkung des 3R-Schraubendreher- / Bitspitzes in die entsprechenden Schraubenschlitze. Somit ist die Zentrierung des 3R-Bits dank seiner direkten Auflage auf den um 45° geneigten Eckflächen (19), der anschliessenden Flächenkanten (17), den nach aussen geneigten Flächen (10), der Ansatzwinkelabrundungen (11), des Schraubenkopfzentrums (13) sowie der halbrunden Zentrierflächen (12) gesichert.

### Blatt 9 - A: Detail / Prinzip der Zentrierung von 3R-Radialschlitzschrauben:

**Fig. 57** - Darstellung der Freiflächen (F), welche zwischen den Bit-Flächen (1) und den 3R-Radialschlitzschraubenflächen (9) durch die beiden a°-Winkel entstehen. Dank der 3 halbrundköpfigen Zentrierflächenteile (15) ist die Senkung des 3R-Bits in die Schlitzschraubenflächen (9) gesichert, wobei jeder der beiden a°-Winkel in einem Bereich von 0 bis 5°, bevorzugt 3°, (bei den Diametralschlitzschrauben im Bereich von 0° bis 20°), die Freiflächen für diesen Zentriervorgang ergeben. Mit n1 wird somit die Breite der 3R-Radialbitteile zwischen den beiden Kontaktflächen (1) bezeichnet, und mit n2 die maximale Schlitzbreite des Schraubenkopfes. Ziel dieses Zentriervorganges ist, dass die Breite der 3R-Radialbitteile (n1) gleich oder mit sehr kleiner Massreduktion der Breite der maximalen Schlitzbreite des Schraubenkopfes (n2), (20), entsprechen, womit die parallelen vollen Kraftübertragungen gesichert werden.

**Fig. 58** - Darstellung der Auflage der Bit-Schlitzflächen (1) in direktem Kontakt mit den 3R-Radialsschlitzschraubenflächen (9) nach der Drehung des 3R-Bits um den a°-Winkel. Damit werden die Drehkräfte auf den vollen Schlitzflächen (1), (9), übertragen.

## Patentansprüche

1. Schlitzschraube, welche auf dem Schraubenkopf Schlitzflächen (9) aufweist, wobei die Schlitzwandflächen bei vertikal orientierter Schraubenachse vertikal oder annähernd vertikal sind und die Schlitzwandflächen zueinander parallel oder annähernd parallel angeordnet sind, wobei die Schlitzschraube weiter über nach aussen in einem Winkel im Bereich von 0° bis 20° geneigte Schlitzgrundflächen (10) und eine durch abgerundete Spitzenflächen (11) in der Mitte der Schlitzgrundflächen (10) gelagerte vertiefte Zentrierfläche (12) mit halbrundem Querschnitt und einem tiefsten Punkt (13) verfügt, wobei die Schlitzschraube derart ausgebildet ist, dass eine aufzunehmende Spitze für manuelle Schraubendreher/Bits und für Schraubendrehapparate durch ihre Schraubdruckflächen (1), welche bei vertikal orientierter Drehachse des Werkzeugs vertikal oder annähernd vertikal sind und welche zueinander paarweise parallel oder annähernd parallel angeordnet sind, durch die entsprechenden Schlitzauflageflächen (3) und eine durch abgerundete Eckflächen (4) in der Mitte der Schlitzauflageflächen (3) gelagerte erhöhte Zentrierfläche (5) mit halbrundem Querschnitt und einem höchsten Punkt (6) die Zentrierung der Schraubendreher-/Bitspitzen in der Schlitzschraube zur Einführung, zum Beginn und während des Schraubendrehganges sichern kann.

2. Schlitzschraube nach Anspruch 1, **dadurch gekennzeichnet, dass** die Schlitzschraube als Diametralschlitzschraube mit einem Diametralschlitz ausgebildet ist, wobei die Schlitzschraube zwei nach aussen in einem Winkel im Bereich von 0° bis 20° geneigte Schlitzgrundflächen (10) aufweist und die Zentrierfläche (12) durch zwei abgerundete Spitzenflächen (11) in der Mitte der Schlitzgrundflächen (10) gelagert ist.

3. Schlitzschraube nach Anspruch 1, **dadurch gekennzeichnet, dass** die Schlitzschraube als dreizählige Radialschlitzschraube ausgebildet ist, und auf dem Schraubenkopf drei vertikal verbundene halbe und doppelseitige Diametralschlitzflächen aufweist welche bezüglich einer vertikalen Zentrierachse um je einen Winkel von 120° zueinander versetzt sind, wobei die Schlitzschraube drei nach aussen in einem Winkel im Bereich von 0° bis 20° geneigte Schlitzgrundflächen (10) aufweist und die Zentrierfläche (12) durch drei abgerundete Spitzenflächen (11) in der Mitte der Schlitzgrundflächen (10) gelagert ist.

4. Schlitzschraube nach einem der Ansprüche 1 bis 3, **dadurch gekennzeichnet, dass** die Schlitzwandflächen (9) bei vertikal orientierter Schraubenachse vertikal und parallel sind.

5. Schlitzschraube nach einem der Ansprüche 1 bis 4, **dadurch gekennzeichnet, dass** der Schraubenkopf eine halbkugelförmige weitere Zentrierfläche (15) auf der Schraubenkopfoberfläche (8) aufweist.

6. Schlitzschraube nach einem der Ansprüche 1 bis 5, **dadurch gekennzeichnet, dass** die Schlitzgrundflächen (10) nach aussen in einem Winkel zu 13° nach unten geneigt sind.

7. Schlitzschraube nach einem der Ansprüche 1 bis 5, **dadurch gekennzeichnet, dass** die Schlitzgrundflächen (10) bei vertikal orientierter Schraubenachse horizontal sind.

8. Schlitzschraube nach einem der Ansprüche 1 bis 7, **dadurch gekennzeichnet, dass** die Schlitzschraube einen konischen Unterkopf aufweist.

9. Schlitzschraube nach einem der Ansprüche 1 bis 8, **dadurch gekennzeichnet, dass** jeweilige Hälften der Schlitzwandflächen (9) in parallelem Bezug zur Längsachse des Diametral- oder Radialschlitzes einen Winkel von 0° bis 20°, bevorzugt 3°, aufweisen zur Erleichterung der Einfügung der Zentrierfläche (5) und der vertikalen Schraubdruckflächen (1) der aufzunehmenden Schraubendreher-/Bitspitze in den Diametral- oder Radialschlitz.

10. Schlitzschraube nach Anspruch 2 und nach einem der Ansprüche 5 bis 9, **dadurch gekennzeichnet, dass** die Schlitzschraube derart ausgebildet ist, dass eine Zentrierung der Zentrierfläche (5) der aufzunehmenden Schraubendreher-/Bitspitze in der halbkugelförmigen weiteren Zentrierfläche (15) der Schraubenkopfoberfläche (8) auf einem Drehwinkel von 180° ermöglicht wird und dies ohne eine Auflagerung der tiefsten äusseren Ecken (2) auf der Schraubenkopfoberfläche (8) vor dem Eintritt in die Schlitzflächen (9).

11. Schlitzschraube nach einem der Ansprüche 1 bis 10, **dadurch gekennzeichnet, dass** sie aus Eisenmetallen, Nichteisenmetallen oder Kunststoffen gefertigt ist.

12. Schlitzschraube nach einem der Ansprüche 1 bis 11, **dadurch gekennzeichnet, dass** sie als magnetische Einheit hergestellt ist zur Aufnahme bzw. als Zentrierungshilfe für aufzunehmende Schraubendreher-/Bitspitzen aus Eisenmetallen.

13. Schlitzschraube nach einem der Ansprüche 1 bis 12, **dadurch gekennzeichnet, dass** sie als Zylinderkopfschraube, konische Senkschraube, Halbrundkopfschraube oder Linsensenkkopfschraube ausgebildet ist und um 45° nach oben geneigte äussere Eckflächen (19) aufweist.

14. Werkzeug, welches als manueller Schraubendreher oder Bit-Einsatz für einen Schraubendrehapparat ausgebildet ist, zur Verwendung mit einer Schlitzschraube nach einem der Ansprüche 1 bis 13, **dadurch gekennzeichnet, dass** eine Spitze des Werkzeugs bei vertikal orientierter Drehachse des Werkzeugs vertikale Schraubdruckflächen (1) aufweist, wobei die Schraubdruckflächen (1) vertikal oder annähernd vertikal sind und die Schraubdruckflächen (1) paarweise zueinander parallel oder annähernd parallel angeordnet sind, wobei die Spitze des Werkzeugs weiter nach aussen in einem Winkel im Bereich von 0° bis 20° geneigte Schlitzauflageflächen (3) und eine durch abgerundete Eckflächen (4) in der Mitte der Schlitzauflageflächen (3) gelagerte erhöhte Zentrierfläche (5) mit halbrundem Querschnitt und einem höchsten Punkt (6) aufweist, derart dass eine Zentrierung der Schraubendreher- / Bitspitzen in der einzudrehenden Schlitzschraube zur Einführung, zum Beginn und während des Schraubendrehganges gesichert ist.

15. Werkzeug nach Anspruch 14, **dadurch gekennzeichnet, dass** es zur Verwendung mit einer Diametralschlitzschraube bestimmt ist und zwei zueinander parallele oder annähernd parallele Schraubdruckflächen (1) aufweist sowie zwei nach aussen in einem Winkel im Bereich von 0° bis 20° geneigte Schlitzauflageflächen (3) und eine durch zwei abgerundete Eckflächen (4) in der Mitte der Schlitzauflageflächen (3) gelagerte erhöhte Zentrierfläche (5) mit halbrundem Querschnitt.

16. Werkzeug nach Anspruch 14, **dadurch gekennzeichnet, dass** es zur Verwendung mit einer dreizähligen Radialschlitzschraube bestimmt ist, und dreimal zwei paarweise zueinander parallele oder annähernd parallele Schraubdruckflächen (1) aufweist, wobei die Schraubdruckflächenpaare bezüglich einer bei vertikal orientierter Drehachse des Werkzeugs vertikalen Zentrierachse um je einen Winkel von 120° zueinander versetzt sind, wobei das Werkzeug weiter drei nach aussen in einem Winkel im Bereich von 0° bis 20° geneigte Schlitzauflageflächen (3) aufweist und die Zentrierfläche (5) durch drei abgerundete Eckflächen (4) in der Mitte der Schlitzauflageflächen (3) gelagert ist.

17. Werkzeug nach einem der Ansprüche 14 bis 16, **dadurch gekennzeichnet, dass** die Schraubdruckflächen (1) bei vertikal orientierter Drehachse des Werkzeugs vertikal und parallel sind.

18. Werkzeug nach einem der Ansprüche 14 bis 17, **dadurch gekennzeichnet, dass** äussere Ecken (2) der Spitze Schrägflächen (16) aufweisen, welche derart ausgebildet sind, dass sie auf einen Neigungswinkel von 45° eines konischen Unterkopfs der Schlitzschraube sowie entsprechend ausgeführter Diametral- oder Radialschlitze von Zylinder-, Halbrundkopf- und Linsensenkkopfschrauben angepasst sind.

19. Werkzeug nach einem der Ansprüche 14 bis 18, **dadurch gekennzeichnet, dass** die Spitze als magnetische Einheit hergestellt ist zur Aufnahme bzw. Zentrierungshilfe einer einzudrehenden Schlitzschraube aus einem Eisenmetall.

20. Werkzeug nach einem der Ansprüche 14 bis 19, **dadurch gekennzeichnet, dass** die Spitze auf den Schraubdruckflächen (1) über Gleitsicherungen zur Kraftübertragung und Zentrierung in den Schlitzflächen der einzudrehenden Schlitzschraube verfügt.

## Claims

1. Slotted screw which has slot surfaces (9) on the screw head, wherein the slot wall surfaces are vertical or approximately vertical at vertically orientated screw axis and the slot wall surfaces are arranged parallel to one another or approximately parallel to one another, wherein the slotted screw, furthermore, has slot base areas (10), inclined outwards at an angle within the range of 0° to 20°, and a half-round and deepened centring surface (12) with half-round cross section and with a deepest point (13), said centring surface (12) being located in the centre of the slot base areas (10) by rounded-off point surfaces (11), wherein the slotted screw is designed in such a way that a tip, to be received, for manual screwdrivers/bits and for screwdriving apparatuses, by means of its screwdriving surfaces (1), which are vertical or approximately vertical at vertically orientated rotation axis of the tool and which are arranged parallel to one another or approximately parallel to one another, and by means of the corresponding slot seating surfaces (3) and raised centring surface (5) with half-round cross section and with a highest point (6), which centring surface (5) is located in the centre of the slot seating surfaces (3) by rounded-off corner surfaces (4), can ensure the centring of the screwdriver/bit tips in the slotted screw for insertion and for the start of and during the screwdriving operation.

2. Slotted screw according to Claim 1, **characterized in that** the slotted screw is designed as a diametrically slotted screw having a diametrical slot, wherein the slotted screw has two slot base areas (10) inclined outwards at an angle within a range of 0° to 20° and the centring surface (12) is located in the centre of the slot base areas (10) by two rounded-off point surfaces (11).

3. Slotted screw according to Claim 1, **characterized in that** the slotted screw is designed as a triple radially slotted screw and has on the screw head three vertically connected half and double-sided diametrical slot surfaces which are each offset from one another by an angle of 120° relative to a vertical centring axis, wherein the slotted screw has three slot base areas (10) inclined outwards at an angle within the range of 0° to 20°, and the centring surface (12) is located in the centre of the slot base areas (10) by three rounded-off point surfaces (11).

4. Slotted screw according to one of Claims 1 to 3, **characterized in that** the slot wall surfaces (9) are vertical and parallel at vertically orientated screw axis.

5. Slotted screw according to one of Claims 1 to 4, **characterized in that** the screw head has a hemispherical further centring surface (15) on the screw head surface (8).

6. Slotted screw according to one of Claims 1 to 5, **characterized in that** the slot base areas (10) are inclined outwards and downwards at an angle of 13°.

7. Slotted screw according to one of Claims 1 to 5, **characterized in that** the slot base areas (10) are horizontal at vertically orientated screw axis.

8. Slotted screw according to one of Claims 1 to 7, **characterized in that** the slotted screw has a conical head underpart.

9. Slotted screw according to one of Claims 1 to 8, **characterized in that** respective halves of the slot wall surfaces (9), with parallel reference to the longitudinal axis of the diametrical or radial slot, have an angle of 0° to 20°, preferably 3°, in order to facilitate the insertion of the centring surface (5) and of the vertical screwdriving surfaces (1) of the screwdriver/bit tip to be received into the diametrical or radial slot.

10. Slotted screw according to Claim 2 and according to one of Claims 5 to 9, **characterized in that** the slotted screw is designed in such a way that centring of the centring surface (5) of the screwdriver/bit tip, to be received, in the hemispherical further centring surface (15) of the screw head surface (8) is made possible at a turning angle of 180°, and this without the deepest outer corners (2) being superimposed on the screw head surface (8) before entering the slot surfaces (9).

11. Slotted screw according to one of Claims 1 to 10, **characterized in that** it is produced from ferrous metals, nonferrous metals or plastics.

12. Slotted screw according to one of Claims 1 to 11, **characterized in that** it is produced as a magnetic unit for receiving or as a centring aid for screwdriver/bit tips of nonferrous metals to be received.

13. Slotted screw according to one of Claims 1 to 12, **characterized in that** it is designed as a cheese head screw, countersunk screw, round head screw or raised countersunk head screw and has outer corner surfaces (19) inclined upwards by 45°.

14. Tool, which is designed as a manual screwdriver or bit insert for a screwdriving apparatus, for use with a slotted screw according to one of Claims 1 to 13, **characterized in that** a tip of the tool has vertical screwdriving surfaces (1) at vertically orientated rotation axis of the tool, wherein the screwdriving surfaces (1) are vertical or approximately vertical and are arranged in pairs parallel to one another or approximately parallel to one another, wherein the tip of the tool, furthermore, has slot seating surfaces (3), inclined outwards at an angle within a range of 0° to 20°, and raised centring surface (5) with half-round cross section and a highest point (6), said centring surface (5) being located in the centre of the slot seating surfaces (3) by rounded-off corner surfaces (4), in such a way that centring of the screwdriver/bit tips in the slotted screw to be screwed in is ensured for insertion and for the start of and during the screwdriving operation.

15. Tool according to Claim 14, **characterized in that** it is intended for use with a diametrically slotted screw and has two screwdriving surfaces (1) parallel to one another or approximately parallel to one another and also two slot seating surfaces (3), inclined outwards at an angle within the range of 0° to 20°, and a half-round and raised centring surface (5) with half-round cross section and located in the centre of the slot seating surfaces (3) by two rounded-off corner surfaces (4).

16. Tool according to Claim 14, **characterized in that** it is intended for use with a triple radially slotted screw and has triple pairs of screwdriving surfaces (1) parallel to one another or approximately parallel to one another, wherein the pairs of screwdriving surfaces are each offset from one another by an angle of 120° relative to a vertical centring axis at vertically orientated rotation axis of the tool, wherein the tool, furthermore, has three slot seating surfaces (3), inclined outwards at an angle within the range of 0° to 20°, and the centring surface (5) is located in the centre of the slot seating surfaces (3) by three rounded-off corner surfaces (4).

17. Tool according to one of Claims 14 to 16, **characterized in that** the two screwdriving surfaces (1) are vertical and parallel at vertically oriented rotation axis of the tool.

18. Tool according to one of Claims 14 to 17, **characterized in that** outer corners (2) of the tip have sloping surfaces (16) which are formed in such a way that they are adapted to an inclination angle of 45° of a conical head underpart of the slotted screw and of correspondingly designed diametrical or radial slots of cheese head screws, round head screws and raised countersunk head screws.

19. Tool according to one of Claims 14 to 18, **characterized in that** the tip is produced as a magnetic unit for receiving or as a centring aid for a slotted screw to be screwed in and made of a ferrous metal.

20. Tool according to one of Claims 14 to 19, **characterized in that** the tip on the screwdriving surfaces (1) has anti-slip means for the force transmission and centring in the slot surfaces of the slotted screw to be screwed in.

## Revendications

1. Vis à fente, qui présente des faces de fente (9) sur la tête de la vis, dans laquelle les faces de paroi de la fente sont verticales ou à peu près verticales lorsque l'axe de la vis est orienté verticalement et les faces de paroi de la fente sont disposées parallèlement ou à peu près parallèlement l'une à l'autre, dans laquelle la vis à fente présente en outre des faces de fond de la fente (10) inclinées vers l'extérieur d'un angle compris dans une plage de 0° à 20° et une face de centrage creusée (12) ayant une section transversale semi-circulaire et un point bas (13), située avec des faces de sommet arrondies (11) au milieu des faces de fond de la fente (10), dans laquelle la vis à fente est réalisée de telle manière qu'une pointe à loger pour des tournevis manuels ou des embouts de vissage aussi pour des appareils de vissage puisse, par ses faces de pression sur la vis (1), qui sont verticales ou à peu près verticales lorsque l'axe de rotation de l'outil est orienté verticalement et qui sont disposées par paire parallèlement ou à peu près parallèlement l'une à l'autre, par les faces correspondantes d'appui de la fente (3) et par une face de centrage surélevée (5) ayant une section transversale semi-circulaire et un point haut (6), située au moyen de faces de bord arrondies (4) au milieu des faces d'appui de la fente (3), assurer le centrage des tournevis/embouts de vissage dans la vis à fente pour l'introduction, le commencement et pendant l'opération de vissage de la vis.

2. Vis à fente selon la revendication 1, **caractérisée en ce que** la vis à fente se présente sous la forme d'une vis à fente diamétrale avec une fente diamétrale, dans laquelle la vis à fente présente deux faces de fond de la fente (10) inclinées vers l'extérieur d'un angle compris dans une plage de 0° à 20° et la face de centrage (12) est située au moyen de deux faces de sommet arrondies (11) au milieu des faces de fond de la fente (10).

3. Vis à fente selon la revendication 1, **caractérisée en ce que** la vis à fente se présente sous la forme d'une vis à fente radiale triple, et présente sur la tête de la vis trois faces de fente diamétrale à deux côtés et sur la moitié du diamètre, reliées verticalement, qui sont chaque fois décalées entre elles d'un angle de 120° par rapport à un axe de centrage vertical, dans laquelle la vis à fente présente trois faces de fond de la fente (10) inclinées vers l'extérieur d'un angle compris dans une plage de 0° à 20° et la face de centrage (12) est située au moyen de trois faces de sommet arrondies (11) au milieu des faces de fond de la fente (10).

4. Vis à fente selon l'une quelconque des revendications 1 à 3, **caractérisée en ce que** les faces de paroi de la fente (9) sont verticales et parallèles lorsque l'axe de la vis est orienté verticalement.

5. Vis à fente selon l'une quelconque des revendications 1 à 4, **caractérisée en ce que** la tête de la vis présente une autre face de centrage hémisphérique (15) sur la surface (8) de la tête de la vis.

6. Vis à fente selon l'une quelconque des revendications 1 à 5, **caractérisée en ce que** les faces de fond de la fente (10) sont inclinées vers le bas et vers l'extérieur d'un angle pouvant atteindre 13°.

7. Vis à fente selon l'une quelconque des revendications 1 à 5, **caractérisée en ce que** les faces de fond de la fente (10) sont horizontales lorsque l'axe de la vis est orienté verticalement.

8. Vis à fente selon l'une quelconque des revendications 1 à 7, **caractérisée en ce que** la tête de la vis à fente présente une face inférieure conique.

9. Vis à fente selon l'une quelconque des revendications 1 à 8, **caractérisée en ce que** des moitiés respectives des faces de paroi de la fente (9) présentent parallèlement par rapport à l'axe longitudinal de la fente diamétrale ou radiale un angle de 0° à 20°, de préférence de 3°, pour faciliter l'introduction dans la fente diamétrale ou radiale de la face de centrage (5) et des faces verticales (1) de pression sur la vis des tournevis/embouts de vissage à appliquer.

10. Vis à fente selon la revendication 2 et selon l'une quelconque des revendications 5 à 9, **caractérisée en ce que** la vis à fente est réalisée de telle manière qu'un centrage de la face de centrage (5) des tournevis/embouts de vissage à appliquer dans l'autre face de centrage hémisphérique (15) de la surface de la tête de la vis (8) soit possible sur un angle de rotation de 180° et ceci sans appui des bords extérieurs les plus profonds (2) sur la surface de la tête de la vis (8) avant l'entrée dans les faces de fente (9).

11. Vis à fente selon l'une quelconque des revendications 1 à 10, **caractérisée en ce qu'**elle est fabriquée en métaux ferreux, en métaux non ferreux ou en matières synthétiques.

12. Vis à fente selon l'une quelconque des revendications 1 à 11, **caractérisée en ce qu'**elle est fabriquée sous la forme d'une unité magnétique pour la réception ou comme aide au centrage pour des tournevis/embouts de vissage en métaux ferreux à y appliquer.

13. Vis à fente selon l'une quelconque des revendications 1 à 12, **caractérisée en ce qu'**elle se présente sous la forme d'une vis à tête cylindrique, d'une vis à tête fraisée conique, d'une vis à tête ronde ou d'une vis à tête fraisée bombée et présente des faces de bord extérieures (19) inclinées vers le haut de 45°.

14. Outil, qui se présente sous la forme d'un tournevis manuel ou d'un embout de vissage pour une machine de vissage, à utiliser avec une vis à fente selon l'une quelconque des revendications 1 à 13, **caractérisé en ce qu'**une pointe de l'outil présente des faces de pression sur la vis (1) verticales lorsque l'axe de rotation de l'outil est orienté verticalement, dans lequel les faces de pression sur la vis (1) sont verticales ou à peu près verticales et les faces de pression sur la vis (1) sont disposées par paire parallèlement ou à peu près parallèlement l'une à l'autre, dans lequel la pointe de l'outil présente en outre des faces d'appui de la fente (3) inclinées vers l'extérieur d'un angle compris dans une plage de 0° à 20° et une face de centrage surélevée (5) ayant une section transversale semi-circulaire et un point haut (6), située au moyen de faces de bord arrondies (4) au milieu des faces d'appui de la fente (3), de telle manière qu'un centrage des tournevis/embouts de vissage dans la vis à fente à visser soit assuré pour l'introduction, le commencement et pendant l'opération de vissage.

15. Outil selon la revendication 14, **caractérisé en ce qu'**il est destiné à être utilisé avec une vis à fente diamétrale et présente deux faces de pression sur la vis (1) parallèles ou à peu près parallèles l'une à l'autre ainsi que deux faces d'appui de la fente (3) inclinées vers l'extérieur d'un angle compris dans une plage de 0° à 20° et une face de centrage surélevée (5) ayant une section transversale semi-circulaire, située au moyen de deux faces de bord arrondies (4) au milieu des faces d'appui de la fente (3).

16. Outil selon la revendication 14, **caractérisé en ce qu'**il est destiné à être utilisé avec une vis à fente radiale triple et présente trois fois deux faces de pression sur la vis (1) disposées par paires parallèlement ou à peu près parallèlement l'une à l'autre, dans lequel les paires de faces de pression sur la vis sont chaque fois décalées entre elles d'un angle de 120° par rapport à un axe de centrage vertical lorsque l'axe de rotation de l'outil est orienté verticalement, dans lequel l'outil présente en outre trois faces d'appui de la fente (3) inclinées vers l'extérieur d'un angle compris dans une plage de 0° à 20° et la face de centrage (5) est située au moyen de trois faces de bord arrondies (4) au milieu des faces d'appui de la fente (3).

17. Outil selon l'une quelconque des revendications 14 à 16, **caractérisé en ce que** les faces de pression sur la vis (1) sont verticales et parallèles lorsque l'axe de rotation de l'outil est orienté verticalement.

18. Outil selon l'une quelconque des revendications 14 à 17, **caractérisé en ce que** des bords extérieurs (2) de la pointe présentent des faces obliques (16), qui sont réalisées de telle manière qu'elles soient adaptées à un angle d'inclinaison de 45° d'une face inférieure conique de la tête de la vis à fente ainsi qu'à des fentes diamétrales ou radiales réalisées de manière correspondante de vis à tête cylindrique, de vis à tête ronde, et de vis à tête fraisée bombée.

19. Outil selon l'une quelconque des revendications 14 à 18, **caractérisé en ce que** la pointe est réalisée sous la forme d'une unité magnétique comme logement ou aide au centrage d'une vis à fente à visser en un métal ferreux.

20. Outil selon l'une quelconque des revendications 14 à 19, **caractérisé en ce que** la pointe possède sur les faces de pression sur la vis (1) des protections contre le glissement pour la transmission des forces et le centrage dans les faces de fente de la vis à fente à visser.
